# EUROPEAN PATENT APPLICATION

(11) **EP 4 560 770 A1**
(43) Date of publication of application: **28.05.2025**
(21) Application number: 22969723.0
(22) Date of filing: 29.12.2022
(51) Int. Cl.: H01M 10/0587, H01M 10/0525

(54) **ELECTRODE ASSEMBLY, BATTERY CELL, BATTERY, AND ELECTRIC APPARATUS**

(71) Applicant: Contemporary Amperex Technology Co., Limited, Ningde, Fujian 352100 (CN)
(72) Inventor: GUO, Suogang, Ningde, Fujian 352100 (CN); FU, Chenghua, Ningde, Fujian 352100 (CN); YE, Yonghuang, Ningde, Fujian 352100 (CN); CHANG, Wen, Ningde, Fujian 352100 (CN)
(74) Representative: Gong, Jinping
(86) International application number: PCT/CN2022/143635
(87) International publication number: WO 2024/138576

(57) **Abstract**

The embodiments of the present application provide an electrode assembly, a battery cell, a battery, and an electrical device. The electrode assembly includes a first electrode plate, a second electrode plate, and an isolation assembly. The first electrode plate and the second electrode plate have opposite polarities, and the isolation assembly is configured to isolate the first electrode plate from the second electrode plate. The first electrode plate, the second electrode plate, and the isolation assembly are wound and form a bent area. The isolation assembly includes a multi-layer structural area provided between the first electrode plate and the second electrode plate, and at least a portion of the multi-layer structural area is provided in the bent area.

## Description

### TECHNICAL FIELD

The present application relates to the field of battery technology, and in particular to an electrode assembly, a battery cell, a battery, and an electrical device.

### BACKGROUND

Battery cells are widely used in electronic devices, such as mobile phones, laptops, electric cars, electric vehicles, electric airplanes, electric ships, electric toy cars, electric toy ships, electric toy planes and electric tools.

In the development of the battery technology, how to improve the safety of battery cells is a research direction in the battery technology.

### SUMMARY

In view of the above issues, the present application provides an electrode assembly, a battery cell, a battery, and an electrical device, which can improve the safety of the battery cell.

In a first aspect, embodiments of the present application provide an electrode assembly including a first electrode plate, a second electrode plate, and an isolation assembly. The first electrode plate and the second electrode plate have opposite polarities, and the isolation assembly is configured to isolate the first electrode plate from the second electrode plate. The first electrode plate, the second electrode plate, and the isolation assembly are wound and form a bent area. The isolation assembly includes a multi-layer structural area provided between the first electrode plate and the second electrode plate, and at least a portion of the multi-layer structural area is provided in the bent area.

The first electrode plate and the second electrode plate located in the bent area need to be bent, and the active substance layer of the first electrode plate and the active substance layer of the second electrode plate are prone to stress concentration during the bending, leading to the peeling-off of the respective active substances. Due to the peeling-off of active substances, the intercalating sites of metal ions in the negative electrode active substance layer may be fewer than the number of metal ions that can be provided by the adjacent positive electrode active substance layer, leading to the phenomenon of metal ion precipitation. Embodiments of the present application provide at least a portion of the multi-layer structural area in the bent area. Even if the metal ions precipitate in the bent area, the multi-layer structural area can block the dendrites of the precipitated metal layer, so as to reduce the probability of conduction between the first electrode plate and the second electrode plate, effectively reduce the risk of short circuit, and improve the service life and safety of the electrode assembly.

In some embodiments, the first bent portion of the first electrode plate is adjacent to the first bent portion of the second electrode plate, and at least a portion of the multi-layer structural area is provided within a first accommodating gap between the first bent portion of the first electrode plate and the first bent portion of the second electrode plate.

The curvature of the first bent portion of the first electrode plate and the curvature of the first bent portion of the second electrode plate are relatively large. During charging, the first bent portion of the first electrode plate or the first bent portion of the second electrode plate is prone to the problem of metal ion precipitation. The above technical solution reduces the risk of the dendrites conducting the first bent portion of the first electrode plate with the first bent portion of the second electrode plate by providing at least a portion of the multi-layer structural area in the first accommodating gap, thereby improving the safety of the battery cell.

In some embodiments, the second bent portion of the first electrode plate is adjacent to the second bent portion of the second electrode plate. At least a portion of the multi-layer structural area is provided within a second accommodating gap between the second bent portion of the first electrode plate and the second bent portion of the second electrode plate.

The curvature of the second bent portion of the first electrode plate and the second bent portion of the second electrode plate are relative large. During charging, the second bent portion of the first electrode plate or the second bent portion of the second electrode plate is prone to the problem of metal ion precipitation. The above technical solution reduces the risk of the dendrites conducting the second bent portion of the first electrode plate with the second bent portion of the second electrode plate by providing at least a portion of the multi-layer structural area in the second accommodating gap, thereby improving the safety of the battery cell.

In some embodiments, the multi-layer structural area extends continuously along the winding direction of the electrode assembly and passes through the first accommodating gap and the second accommodating gap in sequence.

The multi-layer structural area is provided continuously and can simultaneously isolate the first bent portion of the first electrode plate from the first bent portion of the second electrode plate, as well as the second bent portion of the first electrode plate from the second bent portion of the second electrode plate, thereby reducing safety risk caused by metal ion precipitation and simplifying the structure of the isolation assembly, facilitating the formation of the isolation assembly.

In some embodiments, the second electrode plate is the negative electrode plate, and the first electrode plate is the positive electrode plate. The first bent portion of the second electrode plate is located on the inner side of the first bent portion of the first electrode plate. The second bent portion of the second electrode plate is located on the inner side of the second bent portion of the first electrode plate.

The first bent portion of the second electrode plate is provided on the inner side of the first bent portion of the first electrode plate, and the second bent portion of the second electrode plate is provided on the inner side of the second bent portion of the first electrode plate, which can reduce the waste of the positive electrode active substance and improve the capacity of electrode assembly. The curvature of the first bent portion of the second electrode plate is larger than that of the first bent portion of the first electrode plate, and the curvature of the second bent portion of the second electrode plate is larger than that of the second bent portion of the first electrode plate. The first bent portion of the second electrode plate and the second bent portion of the second electrode plate are prone to the peeling-off of the active substance due to bending, and the first bent portion of the second electrode plate and the second bent portion of the second electrode plate are more prone to metal ion precipitation. The multi-layer structure can block the dendrites, so as to reduce the probability of conduction between the first electrode plate and the second electrode plate, effectively reduce the risk of short circuit, and improve the service life and safety of electrode assembly.

In some embodiments, the isolation assembly includes a first isolation member and a second isolation member, the first isolation member includes a first isolation layer, and the second isolation member includes a second isolation layer. The extension length of each of the first isolation layer and the second isolation layer along the winding direction of the electrode assembly is larger than the extension length of either of the first electrode plate and the second electrode plate. The first isolation layer and the second isolation layer insulate and isolate the first electrode plate from the second electrode plate.

Both the first isolation layer and the second isolation layer have a large extension length, and can insulate and isolate the first electrode plate from the second electrode plate, thereby reducing the risk of short circuit between the first electrode plate and the second electrode plate.

In some embodiments, the first isolation member further includes a third isolation layer, and is folded to form the first isolation layer and the third isolation layer. The multi-layer structural area includes an area where the first isolation layer and the third isolation layer are stacked between the first electrode plate and the second electrode plate.

By folding the first isolation member to form the first isolation layer and the third isolation layer, a multi-layer structural area can be formed without the need for additionally adding the isolation member, which can make the winding process more convenient and the integration of the electrode assembly better.

In some embodiments, in the direction opposite to the winding direction of the electrode assembly, the second electrode plate extends beyond the winding starting end of the first electrode plate. The first isolation layer includes a first winding starting section that extends beyond the winding starting end of the first electrode plate and a first isolation section located between the first electrode plate and the second electrode plate. The third isolation layer includes a third winding starting section that extends beyond the winding starting end of the first electrode plate and a third isolation section located between the first electrode plate and the second electrode plate. The winding starting end of the first winding starting section is connected to the winding starting end of the third winding starting section integrally. The multi-layer structural area includes an area where the first isolation section and the third isolation section are stacked between the first electrode plate and the second electrode plate.

By providing the first winding starting section, it is convenient for the winding device to clamp the first isolation layer, reducing the risk of powder falling caused by the winding device directly clamping the electrode plate. The winding starting end of the first winding starting section is connected to the winding starting end of the third winding starting section integrally, and the winding device can almost simultaneously wind the first and third isolation layers, thereby improving the winding efficiency.

In some embodiments, the third isolation section is stacked on the outer side of the first isolation section.

The first isolation layer has a large extension length and needs to be wound continuously with the first electrode plate and the second electrode plate, which requires the first isolation layer to have a high tension to reduce the risk of wrinkling of the first isolation layer in the winding process. The greater the tension is, the easier it is for the first isolation layer to produce a defect area when compressed by the dendrites. In the embodiments of the present application, the third isolation section is stacked on the outer side of the first isolation section, which can reduce the influence of the tension from the first isolation section on the third isolation section, reduce the pressure on the third isolation section, reduce the possibility of the third isolation section being pierced when compressed by the dendrites, reduce the risk of the dendrites conducting the first electrode plate with the second electrode plate, and improve the safety.

In some embodiments, in the winding direction of the electrode assembly, the winding ending end of the first isolation layer extends beyond the winding ending end of the third isolation layer.

The first isolation layer has a large length, and can insulate and isolate the first electrode plate from the second electrode plate. The third isolation layer can have a small length and can only be provided in the inner ring area of the electrode assembly that is prone to metal ion precipitation, thereby reducing the amount of the third isolation layer, lowering the costs, and improving the energy density of the electrode assembly while blocking the dendrites.

In some embodiments, the second isolation member further comprises a fourth isolation layer, and is folded to form the second isolation layer and the fourth isolation layer. The multi-layer structural area includes an area where the first isolation layer and the fourth isolation layer are stacked between the first electrode plate and the second electrode plate.

By folding the second isolation member to form the second isolation layer and the fourth isolation layer, a multi-layer structural area can be formed without the need for additionally adding the isolation member, which can make the winding process more convenient and the integration of the electrode assembly better.

In some embodiments, in the direction opposite to the winding direction of the electrode assembly, the second electrode plate extends beyond the winding starting end of the first electrode plate. The first isolation layer includes a first winding starting section that extends beyond the winding starting end of the first electrode plate and a first isolation section located between the first electrode plate and the second electrode plate. The fourth isolation layer includes a fourth winding starting section that extends beyond the winding starting end of the first electrode plate and a fourth isolation section located between the first electrode plate and the second electrode plate. The winding starting end of the first winding starting section is flush with the winding starting end of the fourth winding starting section. The multi-layer structural area includes an area where the first isolation section and the fourth isolation section are stacked between the first electrode plate and the second electrode plate.

The winding starting end of the first winding starting section is flush with the winding starting end of the fourth winding starting section, and the winding device can almost simultaneously wind the first and fourth isolation layers, thereby improving the winding efficiency.

In some embodiments, the fourth isolation section is stacked on the outer side of the first isolation section.

The first isolation layer has a large extension length and needs to be wound continuously with the first electrode plate and the second electrode plate, which requires the first isolation layer to have a high tension to reduce the risk of wrinkling of the first isolation layer in the winding process. The greater the tension is, the easier it is for the first isolation layer to produce a defect area when compressed by the dendrites. In the embodiments of the present application, the fourth isolation section is stacked on the outer side of the first isolation section, which can reduce the influence of the tension from the first isolation section on the fourth isolation section, reduce the pressure on the fourth isolation section, reduce the possibility of the fourth isolation section being pierced when compressed by the dendrites, reduce the risk of the dendrites conducting the first electrode plate with the second electrode plate, and improve the safety.

In some embodiments, in the winding direction of the electrode assembly, the winding ending end of the first isolation layer extends beyond the winding ending end of the fourth isolation layer.

The first isolation layer has a large length, and can insulate and isolate the first electrode plate from the second electrode plate. The fourth isolation layer can have a small length and can only be provided in the inner ring area of the electrode assembly that is prone to metal ion precipitation, thereby reducing the amount of the fourth isolation layer, lowering the costs, and improving the energy density of the electrode assembly while blocking the dendrites.

In some embodiments, the isolation assembly includes a first isolation member and a second isolation member. The first isolation member is folded to form a first isolation layer and a third isolation layer, and the second isolation member is folded to form a second isolation layer and a fourth isolation layer. The multi-layer structural area includes an area where the first isolation layer, the third isolation layer, and the fourth isolation layer are stacked between the first electrode plate and the second electrode plate.

The multi-layer structural area includes at least three layers, and three-layer structure can further block the dendrites, so as to reduce the probability of conduction between the first electrode plate and the second electrode plate, effectively reduce the risk of short circuit, and improve the service life and safety of electrode assembly. By folding the first and second isolation members, a multi-layer structural area having at least three-layer structure can be formed between the first electrode plate and the second electrode plate, without the need for additionally adding the isolation member, which can make the winding process more convenient and the integration of the electrode assembly better.

In some embodiments, the first electrode plate, the second electrode plate, and the isolation assembly are wound to form a bent area and a straight area. The winding starting end of the first isolation layer and the winding starting end of the third isolation layer are connected with each other integrally and located in the bent area, while the winding starting end of the second isolation layer and the winding starting end of the fourth isolation layer are connected with each other integrally and located in the bent area.

The winding starting end of the first isolation layer, the winding starting end of the second isolation layer, the winding starting end of the third isolation layer, and the winding starting end of the fourth isolation layer can support the first electrode plate and the second electrode plate, increase the curvature of the first electrode plate bending in the bent area, and the curvature of the second electrode plate bending in the bent area, thereby reducing stress concentration, reducing the risk of powder falling from the first electrode plate and the second electrode plate, and reducing metal ion precipitation.

In some embodiments, the first isolation layer and the second isolation layer are located on two sides of the second electrode plate, respectively.

The first isolation layer and the second isolation layer can cover the second electrode plate from two sides to insulate and isolate the second electrode plate from the first electrode plate so as to reduce the risk of short circuit.

In some embodiments, the first isolation layer includes a first winding starting section that extends beyond the winding starting end of the first electrode plate and a first isolation section located between the first electrode plate and the second electrode plate. The second isolation layer includes a second winding starting section that extend beyond the winding starting end of the first electrode plate and a second isolation section, and at least a portion of the second isolation section is located between the first electrode plate and the second electrode plate. The third isolation layer includes a third winding starting section that extends beyond the winding starting end of the first electrode plate and a third isolation section located between the first electrode plate and the second electrode plate. The fourth isolation layer includes a fourth winding starting section that extends beyond the winding starting end of the first electrode plate and a fourth isolation section located between the first electrode plate and the second electrode plate. The multi-layer structural area includes an area where the first isolation section, the third isolation section, and the fourth isolation section are stacked between the first electrode plate and the second electrode plate.

The winding device can clamp the first winding starting section and the second winding starting section, and drive the first isolation layer, second isolation layer, third isolation layer, and fourth isolation layer to wind almost simultaneously through the first and second winding starting sections, thereby improving the winding efficiency. The first isolation layer, the second isolation layer, the third isolation layer, and the fourth isolation layer all exceed the first electrode plate, which can reduce the risk of powder falling caused by direct clamping of the electrode plate due to the winding device when the winding is started.

In some embodiments, the first winding starting section and the third winding starting section are stacked between the second winding starting section and the fourth winding starting section.

The second starting section and the fourth winding starting section can limit the first starting section and the third winding starting section from two sides, reducing the risk of misalignment of the second starting section and the fourth winding starting section during the winding.

In some embodiments, the second isolation section is stacked on the inner side of the second electrode plate. The first isolation section, the third isolation section, and the fourth isolation section are sequentially stacked on the outer side of the second electrode plate.

The third isolation section and the fourth isolation section are stacked on the same side of the first isolation section away from the second isolation section. Therefore, the first isolation member and the second isolation member attain the folding of the first isolation member and the second isolation member while being wound, thereby simplifying the forming process of the electrode assembly.

In some embodiments, along the winding direction, a distance D1 between an end of the third isolation section away from the third winding starting section and an end of the fourth isolation section away from the fourth winding starting section is less than or equal to 5mm.

When the extension length of the three-layer structural area in the multi-layer structural area meets the requirements, the larger the value of D1 is, the more material is wasted in the isolation member. The above technical solution makes D1 less than or equal to 5mm to reduce material waste and improve the energy density of the electrode assembly.

In some embodiments, along the winding direction of the electrode assembly, the third isolation section extends and passes through a first accommodating gap between the first bent portion of the first electrode plate and the first bent portion of the second electrode plate, and the fourth isolation section extends and passes through the first accommodating gap.

The curvature of the first bent portion of the first electrode plate and the curvature of the first bent portion of the second electrode plate are relatively large. During charging, the first bent portion of the first electrode plate or the first bent portion of the second electrode plate is prone to the problem of the metal ion precipitation. The three-layer structure composed of the first isolation section, the third isolation section, and the fourth isolation section can pass through the first accommodating gap to separate the first bent portion of the first electrode plate from the first bent portion of the second electrode plate, so as to reduce the risk of the dendrites conducting the first bent portion of the first electrode plate with the first bent portion of the second electrode plate, and improve the safety of the battery cell.

In some embodiments, along the winding direction of the electrode assembly, the third isolation section extends and passes through the second accommodating gap between the second bent portion of the first electrode plate and the second bent portion of the second electrode plate, and the fourth isolation section extends and passes through the second accommodating gap.

The curvature of the second bent portion of the first electrode plate and the second bent portion of the second electrode plate are relatively large. During charging, the second bent portion of the first electrode plate or the second bent portion of the second electrode plate is prone to the problem of the metal ion precipitation. The three-layer structure composed of the first isolation section, the third isolation section, and the fourth isolation section can pass through the second accommodating gap to separate the second bent portion of the first electrode plate from the second bent portion of the second electrode plate, so as to reduce the risk of the dendrites conducting the second bent portion of the first electrode plate with the second bent portion of the second electrode plate, and improve the safety of the battery cell.

In some embodiments, the first electrode plate, the second electrode plate, and the isolation assembly are wound to form a straight area and a bent area. The end of the third isolation section away from the third winding starting section, and the end of the fourth isolation section away from the fourth winding starting section are located in the straight area.

The end of the third isolation section away from the third winding starting section and the end of the fourth isolation section away from the fourth winding starting section are clamped in the straight area, which can improve the stability of the third isolation section and the fourth isolation section, reduce the risk of displacement of the third and the fourth isolation sections when the electrode assembly is subjected to external impacts, and improve the safety.

In some embodiments, in the winding direction, the third isolation section extends beyond the second accommodating gap by at least 2mm, and the fourth isolation section extends beyond the second accommodating gap by at least 2mm.

During the charging and discharging, the electrode assembly will expand, causing the third and the fourth isolation sections prone to be pulled, further causing the third and the fourth isolation sections to be unable to effectively isolate the second bent portion of the first electrode plate from the second bent portion of the second electrode plate. The embodiments of the present application allow both the third isolation section and the fourth isolation section to exceed the second accommodating gap by at least 2mm, thereby reserving a certain margin for the third and the fourth isolation sections. When the third and the fourth isolation sections are pulled, the third and the fourth isolation sections can still pass through the second accommodating gap and isolate the second bent portion of the first electrode plate from the second bent portion of the second electrode plate, so as to reduce the risk of short circuit and improve the safety.

In some embodiments, the first electrode plate, the second electrode plate, and the isolation assembly are wound to form a straight area and two bent areas which are connected at two ends of the straight area. The first winding starting section, the second winding starting section, the third winding starting section, and the fourth winding starting section are stacked to form a multi-layer winding section bending at least once in each bent area.

The multi-layer winding section can support the first electrode plate and the second electrode plate, increasing the curvature of the first electrode plate in each bent area and the curvature of the second electrode plate in each bent area, thereby reducing stress concentration, reducing the risk of powder falling from the first electrode plate and the second electrode plate, and reducing metal ion precipitation.

In some embodiments, the first electrode plate is a positive electrode plate, and the second electrode plate is a negative electrode plate.

In a second aspect, embodiments of the present application provide a battery cell including a shell and the electrode assembly provided in any one of embodiments of the first aspect, wherein the electrode assembly is accommodated within the shell.

In a third aspect, embodiments of the present application provide a battery including multiple battery cells provided in any one of embodiments of the second aspect.

In the fourth aspect, embodiments of the present application provide an electrical device, including the battery provided for providing electrical energy in any one of embodiments of the third aspect.

### BRIEF DESCRIPTION OF THE DRAWINGS

In order to provide a clearer explanation of the technical solutions of the embodiments of the present application, a brief introduction will be given below to the accompanying drawings required for use in the embodiments of the present application. It is evident that the accompanying drawings are only some embodiments of the present application. For those skilled in the art, other accompanying drawings can be obtained based on the drawings without creative labor.
Fig. 1 is a structural schematic diagram of a vehicle provided in some embodiments of the present application;
Fig. 2 is an exploded schematic diagram of a battery provided in some embodiments of the present application;
Fig. 3 is an exploded schematic diagram of a battery cell provided in some embodiments of the present application;
Fig. 4 is a structural schematic diagram of the electrode assembly provided in some embodiments of the present application;
Fig. 5 is a structural schematic diagram of an electrode assembly shown in Fig. 4 in a flattened state;
Fig. 6 is an enlarged schematic diagram of Fig. 4 at block A;
Fig. 7 is an enlarged schematic diagram of Fig. 4 at block B;
Fig. 8 is a schematic diagram of an electrode assembly provided in some embodiments of the present application during the winding;
Fig. 9 is a structural schematic diagram of an electrode assembly provided in some embodiments of the present application;
Fig. 10 is a structural schematic diagram of the electrode assembly shown in Fig. 9 in a flattened state;
Fig. 11 is a structural schematic diagram of an electrode assembly provided in some embodiments of the present application;
Fig. 12 is a structural schematic diagram of the electrode assembly shown in Fig. 11 in a flattened state.

In the drawings, the drawings are not drawn to the actual scale.

### DETAILED DESCRIPTION

In order to make the purpose, the technical solutions, and the advantages of the embodiments of the present application clearer, the following will provide a clear and complete description for the technical solutions in the embodiments of the present application in conjunction with the accompanying drawings. Obviously, the described embodiments are a part of the embodiments of the present application, but not all the embodiments. Based on the embodiments of the present application, all the other embodiments obtained by the skilled person in the art without creative effort fall within the scope of the protection of the present application.

Unless otherwise defined, all technical and scientific terms used in the text have the same meanings as those commonly understood by the skilled person in the technical field which the present application belongs to. The terms used in the specification of the application in the text are only for the purpose of describing specific embodiments and are not intended to limit the present application. The terms "including" and "having" in the description, the claims, the description of the above accompanying drawings of the present application, and any variations thereof, are intended to cover non-exclusive inclusion. The terms "first", "second", etc. in the description, the claims, or the above accompanying drawings of the present application are for distinguishing different objects, rather than to describe the specific order or the primary and secondary relationship.

In the description of the present application, it should be understood that an orientation or positional relationship indicated by the terms "center", " transverse", "length", "width", "up", "down", "front", "back", "left", "right", "vertical", "horizontal", "top", "bottom", "internal", "external", "axial direction", "radial direction", "circumferential direction", etc. is based on an orientation or positional relationship shown in the accompanying drawings, and is only for the convenience of describing the present application and simplifying the description, but does not indicate or imply that the device or element referred to must have a specific orientation, or be constructed and operated in a specific orientation, and therefore cannot be understood as a limitation on the embodiments of the present application.

In the description of the present application, it should be noted that unless otherwise specified and limited, the terms "installation", "connected with", "connection", "attachment" should be broadly understood. For example, the "connection" may be fixed connection, detachable connection, integrated connection, direct connection, indirect connection via an intermediate medium, or internal communication between two elements. The skilled person in the art may appreciate the specific meanings of the foregoing terms in the present application according to specific circumstances.

Referring to "embodiments" in the text means that specific features, structures, or characteristics described in conjunction with the embodiments may be included in at least one embodiment of the present application. The phrase appearing in various positions in the specification does not necessarily refer to the same embodiment, nor is it an independent or alternative embodiment that is mutually exclusive with other embodiments. The skilled person the art explicitly and implicitly understand that the embodiments described in the text can be combined with other embodiments.

In the text, the term "and/or" is only a description of the association relationship of the associated object, indicating that there can be three types of relationships, such as A and/or B which can indicate the presence of A alone, the presence of A and B simultaneously, and the presence of B alone. In addition, the character "/" in the text generally indicates that the objects associated before and after are an "or" relationship.

The terms "multiple", "a plurality of" appearing in the present application refers to two or more (including two). For the same reason, "multiple groups", "a plurality of groups" refer to two or more groups (including two groups), and "multiple pieces", " a plurality of pieces" refer to two or more (pieces including two pieces).

In the present application, battery cells may include lithium-ion secondary battery cells, lithium-ion primary battery cells, lithium-sulfur battery cells, sodium lithium ion battery cells, sodium ion battery cells, or magnesium ion battery cells, etc., which is not limited by the embodiments of the present application. The battery cells can be cylindrical, flat, cuboid, or other shapes, which is not limited by the embodiments of the present application. The battery cells are generally divided into three types according to the packaging manner: cylindrical battery cells, square battery cells, and soft pack battery cells, which is not limited by the embodiments of the present application.

The battery cell includes an electrode assembly and an electrolyte, and the electrode assembly includes a positive electrode plate, a negative electrode plate, and an isolation member. The battery cell mainly relies on the movement of metal ions between the positive electrode plate and the negative electrode plate for operation. The positive electrode plate includes a positive electrode current collector and a positive electrode active substance layer. The positive electrode active substance layer is applied on the surface of the positive electrode current collector, and the portion of the current collector that is not coated with the positive electrode active substance layer protrudes from the portion of the current collector that is applied with the positive electrode active substance layer. The portion of the current collector that is not coated with the positive electrode active substance layer is used as the positive electrode tab. Taking the lithium-ion battery as an example, the material of the positive electrode current collector can be aluminum, and the positive electrode active substance can be lithium cobalt oxide, lithium iron phosphate, ternary lithium, or lithium manganese oxide. The negative electrode plate includes a negative electrode current collector and a negative electrode active substance layer. The negative electrode active substance layer is applied on the surface of the negative electrode current collector, and the portion of the current collector that is not coated with the negative electrode active substance layer protrudes from the portion of the current collector that is applied with the negative electrode active substance layer. The portion of the current collector that is not coated with the negative electrode active substance layer is used as the negative electrode tab. The material of the negative electrode current collector can be copper, and the negative electrode active substance can be carbon or silicon, etc. In order to ensure the passage of high current without melting, the number of positive electrode tab is multiple and multiple positive electrode tabs are stacked together, and the number of negative electrode tab is multiple and multiple negative electrode tabs are stacked together. The material of the isolation member can be PP (polypropylene) or PE (polyethylene), etc. The development of battery technology needs to consider multiple design factors simultaneously, such as energy density, cycle life, discharge capacity, charge discharge rate and other performance parameters. In addition, the safety of the battery also needs to be considered.

The battery referred to in the embodiments of the present application refers to a single physical module including one or more battery cells to provide higher voltage and capacity. For example, the battery mentioned in the present application may include a battery module or a battery pack, etc. A battery generally includes a case for encapsulating one or more battery cells. The case can prevent liquids or other foreign objects from affecting the charging or discharging of the battery cell.

The isolation member has electronic insulation, and is provided between the positive electrode plate and the negative electrode plate. Its main function is to prevent contact between the positive electrode plate and the negative electrode plate, thereby causing internal short circuit in the electrode assembly. The isolation member has a large number of through micropores, which can ensure the free passage of electrolyte ions. In particular, the isolation member has good permeability to lithium ions. For example, the isolation assembly may include an isolation base layer and a functional layer located on the surface of the isolation base layer. The isolation base layer may be at least one of polypropylene, polyethylene, ethylene propylene copolymer, or polybutylene terephthalate, etc., and the functional layer may be a mixture layer of ceramic oxides and binders.

The isolation member play a very important role in the electrode assembly, and can directly lead to phenomena such as short circuit, reduced performance and life of the electrode assembly.

During charging of the battery cell, metal ions deintercalate from the positive electrode active substance layer and intercalate into the negative electrode active substance layer. However, some abnormal situations may occur, leading to the precipitation of metal ions and the formation of a metal layer. The precipitation of metal ions not only reduces the performance of the battery cell and significantly shortens the cycle life, but also limits the fast charging capacity of the battery cell.

Taking the lithium-ion battery cell as an example, due to insufficient lithium intercalation space in the negative electrode active substance layer, excessive resistance of lithium ion intercalation in the negative electrode active substance layer, or rapid deintercalation of lithium ions from the positive electrode active substance layer, the deintercalated lithium ions cannot all intercalate in the negative electrode active substance layer of the negative electrode plate. Lithium ions that cannot intercalate in the negative electrode plate can only obtain electrons on the surface of the negative electrode plate, thus forming a metallic lithium elementary substance, which is the lithium precipitation phenomenon. Lithium precipitation not only reduces the performance of the battery cell and significantly shortens the cycle life, but also limits the fast charging capacity of the battery cell. In addition, when lithium precipitation occurs in the battery cell, the precipitated lithium metal is very active and can react with the electrolyte at lower temperature, causing a decrease in the starting temperature of self heating (Tonset) and an increase in self heating rate, seriously endangering the safety of the battery cell. Furthermore, when lithium precipitation is severe, the released lithium ions can form a lithium layer on the surface of the negative electrode plate, which may cause a risk of short circuit between adjacent positive electrode plate and negative electrode plate, posing a safety hazard.

Specially, the wound type of electrode assembly is more prone to metal ion precipitation in its bent area. Further research has found that the reason for the phenomenon of metal ion precipitation is mainly that the positive electrode plate and the negative electrode plate located in the bent area need to be bent, and the positive and negative electrode active substance layers are prone to stress concentration during the bending, leading to the peeling-off of the respective active substances. Due to the peeling-off of the active substances, especially on the negative electrode plate, the intercalating sites of the metal ions in the negative electrode active substance layer of the negative electrode plate may be fewer than the number of metal ions that can be provided by the positive electrode active substance layer of the adjacent positive electrode plate, leading to the phenomenon of metal ion precipitation.

After depth research, it was found that the short circuit occurs in that the dendrites in the precipitated metal layer penetrate through the isolation member. Specifically, when a metal layer precipitates on the surface of the negative electrode plate, the metal layer will compress the isolation member between the positive electrode plate and the negative electrode plate, and the isolation member will stretch under the compression of the metal layer. The isolation member is a porous structure. When the isolation member is subjected to stretch, the pore size of the local micropores in the isolation member will increase, resulting in the formation of a defect area on the isolation member. If the defect area of the isolation member is opposite to the metal layer, the small dendrites in the metal layer may pass through the pores with larger pore size in the defect area, causing contact between the dendrites and the positive electrode plate, thus leading to a short circuit.

In view of this, the present application proposes an electrode assembly including a first electrode plate, a second electrode plate, and an isolation assembly. The first electrode plate and the second electrode plate have opposite polarities, and the isolation assembly is configured to isolate the first electrode plate from the second electrode plate. The first electrode plate, the second electrode plate, and the isolation assembly are wound and form a bent area. The isolation assembly includes a multi-layer structural area provided between the first electrode plate and the second electrode plate and at least a portion of the multi-layer structural area is provided in the bent area. The multi-layer structural area of the isolation assembly can reduce the risk of short circuit between the first electrode plate and the second electrode plate in the bent area, and improve the lifespan and safety.

For the convenience of explanation, the following embodiments will take the vehicle as an example of the electrical device.

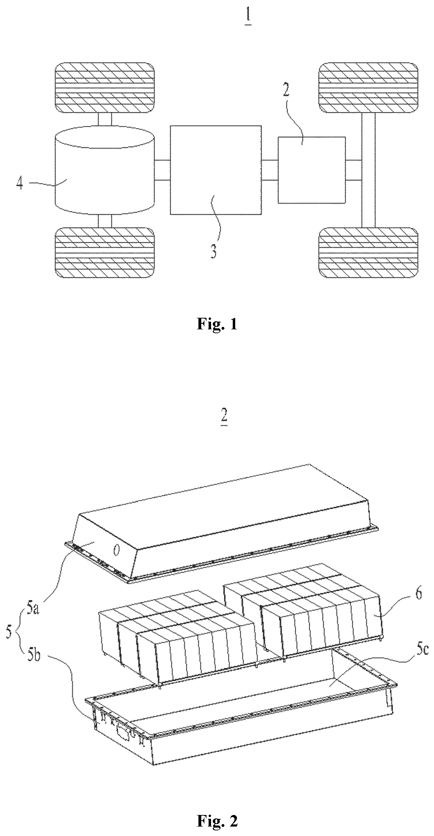

Fig. 1 is a structural schematic diagram of a vehicle provided in some embodiments of the present application. As shown in Fig. 1, the interior of vehicle 1 is provided with a battery 2 which can be installed at the bottom, the head, or the tail of vehicle 1. The battery 2 can be configured for power supply to vehicle 1. For example, the battery 2 can serve as the operating power source for the vehicle 1.

The vehicle 1 may further include a controller 3 and a motor 4. The controller 3 is configured to control the battery 2 to supply power to the motor 4, for example, so as to meet the operational power requirements for starting, navigation, and driving of the vehicle 1.

In some embodiments of the present application, the battery 2 can not only serve as the operating power source for the vehicle 1, but also as the driving power source for the vehicle 1, replacing or partly replacing fuel or natural gas to provide driving power for the vehicle 1.

Fig. 2 is an exploded schematic diagram of a battery provided in some embodiments of the present application. As shown in Fig. 2, the battery 2 includes a case 5 and a battery cell 6, which is accommodated inside the case 5.

The case 5 is configured to accommodate the battery cell 6 and can be of various structures. In some embodiments, the case 5 may include a first case portion 5a and a second case portion 5b, with the first case portion 5a and the second case portion 5b covering each other, and the first case portion 5a and the second case portion 5b jointly defining a space 5c for accommodating the battery cell 6. The second case portion 5b can be a hollow structure with one end open, and the first case portion 5a is a platelike structure that fits on the opening side of the second case portion 5b to form a case 5 with an accommodating space 5c. The first case portion 5a and the second case portion 5b can also be hollow structures with one end open. The opening side of the first case portion 5a fits on the open end of the second case portion 5b to form a case 5 with an accommodating space 5c. Of course, the first case portion 5a and the second case portion 5b can have various shapes, such as cylindrical and cuboid.

In order to improve the sealing performance after the first case portion 5a is connected with the second case portion 5b, a sealing element such as a sealant, a sealing ring can further be provided between the first case portion 5a and the second case portion 5b.

Assuming that the first case portion 5a is covered at the top of the second case portion 5b, the first case portion 5a can also be referred to as a upper case cover, and the second case portion 5b can also be referred to as the lower case.

In the battery 2, there are multiple battery cells 6. Multiple battery cells 6 can be connected in series, parallel, or hybrid. Hybrid connection refers to both series and parallel connections among multiple battery cells 6. Multiple battery cells 6 can be directly connected in series, parallel, or hybrid together, and then the whole composed of multiple battery cells 6 can be accommodated in the case 5; Of course, multiple battery cells 6 can be first connected in series, parallel, or hybrid to form a battery module, and then multiple battery modules are connected in series, parallel, or hybrid to form a whole, which is accommodated in the case 5.

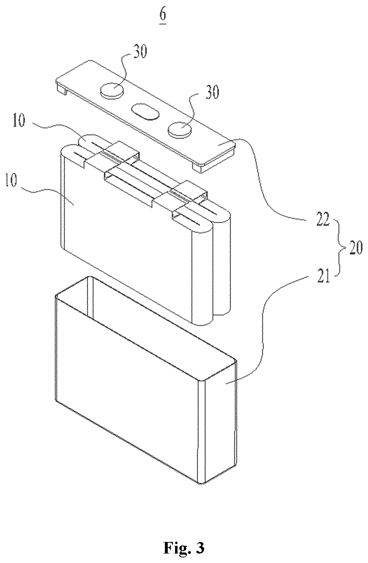

Fig. 3 is an exploded schematic diagram of a battery cell provided in some embodiments of the present application.

The battery cell 6 refers to the smallest unit that makes up the battery 2. As shown in Fig. 3, the battery cell 6 includes a shell 20, an electrode assembly 10, and other functional components, and the electrode assembly 10 is accommodated within the shell 20.

In some embodiments, the shell 20 includes an end cover 22 and a shell body 21.

The end cover 22 refers to a component that fits on opening of the shell body 21 to isolate the internal environment of the battery cell 6 from the external environment. Unlimitedly, the shape of the end cover 22 can be adapted to the shape of the shell body 21 to fit the shell body 21. Optionally, the end cover 22 can be made of material with certain hardness and strength (such as aluminum alloy), so that the end cover 22 is less prone to deformation when subjected to compression and collision, allowing the battery cell 6 to have higher structural strength and improved safety performance. Functional components such as an electrode terminal 30 can be installed on the end cover 22. The electrode terminal 30 can be used for electrical connection with the electrode assembly 10 to output or input the electrical energy of the battery cell 6.

In some embodiments, a pressure relief mechanism may further be provided on the end cover 22 for releasing internal pressure when the internal pressure or temperature of the battery cell 6 reaches a threshold. The material of the end cover 22 can also be various, such as copper, iron, aluminum, stainless steel, aluminum alloy and plastic, which is not limited by the embodiments of the present application s of the present application.

In some embodiments, an insulation member may further be provided on the inner side of the end cover 22. The insulating member can be configured to isolate the electrical connection components inside the shell body 21 from the end cover 22 to reduce the risk of short circuit. For example, the insulation member can be plastic and rubber.

The shell body 21 is a component configured to mate with the end cover 22 to form an internal environment of the battery cell 6, wherein the formed internal environment can be configured to accommodate the electrode assembly 10, the electrolyte, and other components. The shell body 21 and the end cover 22 can be independent components, and an opening can be provided on the shell body 21. At the opening, the end cover 22 fits on the opening so as to form an internal environment of the battery cell 6. Unlimitedly, it is also possible to integrate the end cover 22 and the shell body 21. Specifically, the end cover 22 and the shell body 21 can form a common connection surface before other components enter the shell. When it is necessary to encapsulate the interior of the shell body 21, the end cover 22 can then cover the shell body 21. The shell body 21 can be of various shapes and sizes, such as cuboid, cylindrical and hexagonal prism. Specifically, the shape of the shell body 21 can be determined based on the specific shape and size of the electrode assembly 10. The material of the shell body 21 can be various, such as copper, iron, aluminum, stainless steel, aluminum alloy and plastic, which is limited specially by the embodiments of the present application.

The electrode assembly 10 is a component capable of undergoing electrochemical reactions. The shell body 21 may contain one or more electrode assemblies 10. The electrode assembly 10 is mainly formed by winding the positive electrode plate and the negative electrode plate, and an isolation member is usually provided between the positive electrode plate and the negative electrode plate. The main body of the electrode assembly 10 is composed of the portions of the positive electrode plate and the negative electrode plate that contain active substances, while the portions of the positive electrode plate and the negative electrode plate that do not contain active substances form electrode tabs respectively. The positive electrode tab and the negative electrode tab can be located together at one end of the main body or respectively at both ends of the main body. In the charging and discharging process of the battery cell 6, the positive and negative electrode active substances react with the electrolyte, and the electrode tabs are connected to the electrode terminal 30 to form a current circuit.

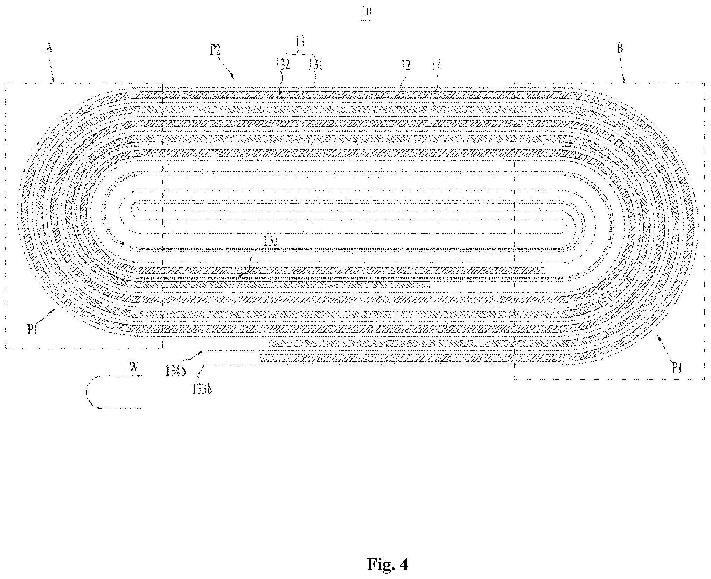

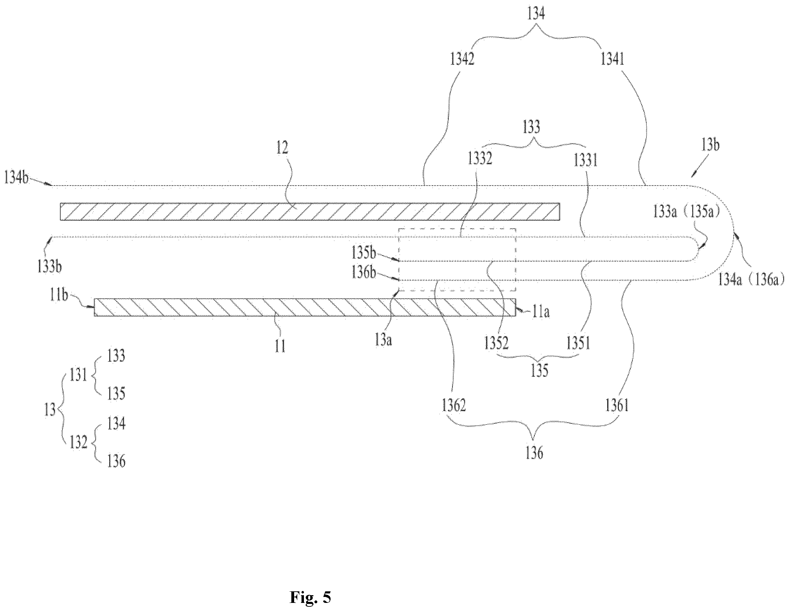

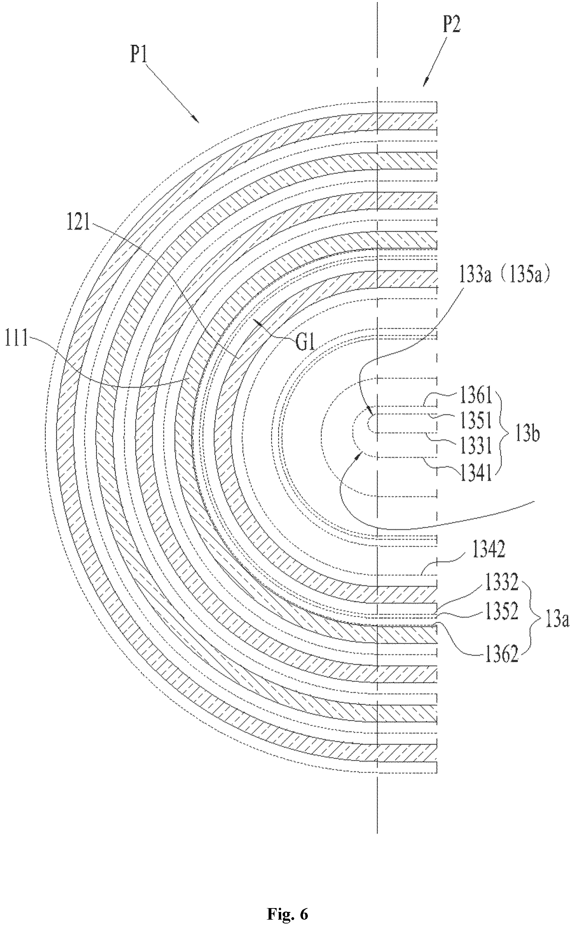

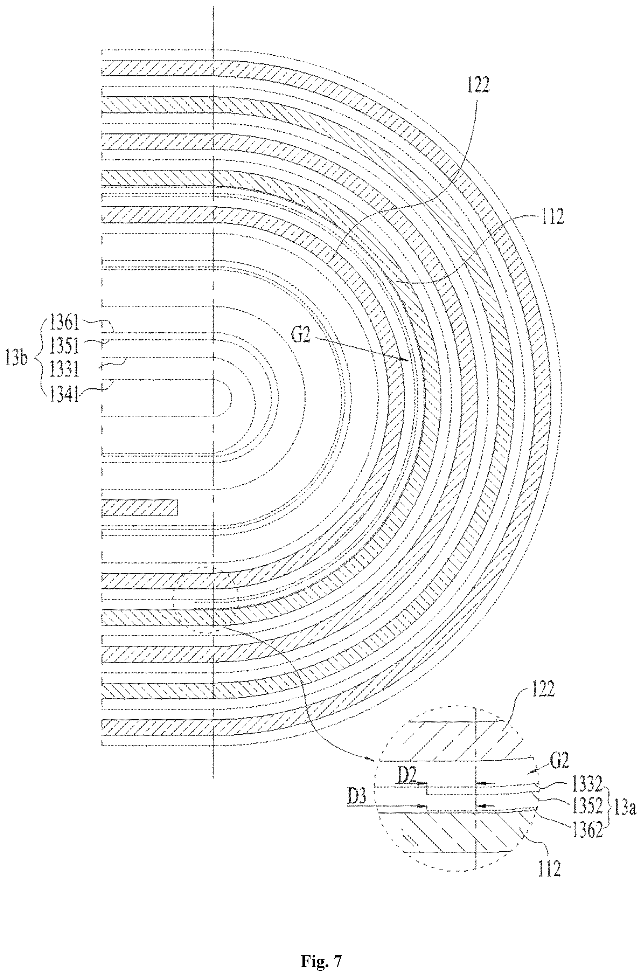

Fig. 4 is a structural schematic diagram of the electrode assembly provided in some embodiments of the present application; Fig. 5 is a structural schematic diagram of the electrode assembly shown in Fig. 4 in the flattened state; Fig. 6 is an enlarged schematic diagram of Fig. 4 at frame A; Fig. 7 is an enlarged schematic diagram of Fig. 4 at frame B.

As shown in Figs. 4 to 7, the electrode assembly 10 of the embodiments of the present application includes a first electrode plate 11, a second electrode plate 12, and an isolation assembly 13. The first electrode plate 11 and the second electrode plate 12 have opposite polarity, and the isolation assembly 13 is configured to isolate the first electrode plate 11 from the second electrode plate 12. The first electrode plate 11, the second electrode plate 12, and the isolation assembly 13 are wound and form a bent area P1. The isolation assembly 13 includes a multi-layer structural area 13a provided between the first electrode plate 11 and the second electrode plate 12, with at least a portion of the multi-layer structural area 13a provided in the bent area P1.

The electrode assembly 10 can be in various shapes. For example, the electrode assembly 10 can be in a cylinder, a flat body, a prism (such as a triangular prism, a tetraprism, and a hexagonal prism), or other shapes.

One of the first electrode plate 11 and the second electrode plate 12 is the positive electrode plate, and the other is the negative electrode plate.

The isolation assembly 13 may include multiple isolation layers.

The multi-layer structural area 13a is an area of the isolation assembly 13 having a multi-layer structure and located between the first electrode plate 11 and the second electrode plate 12. For example, the portion of the isolation assembly 13 where multiple isolation layers are stacked between the first electrode plate 11 and the second electrode plate 12 forms a multi-layer structural area 13a; in the multi-layer structural area 13a, two adjacent isolation layers can be connected with each other or separated from each other.

The number of layers in the multi-layer structural area 13a is larger than or equal to 2. For example, the number of layers in the multi-layer structural area 13a can be 2-15. Optionally, the number of layers in the multi-layer structural area 13a is 2, 3, 5, 8, or 10.

The isolation assembly 13 includes an isolation area provided between the first electrode plate 11 and the second electrode plate 12. The isolation area can be a multi-layer structural area 13a entirely or a multi-layer structural area 13a partially. For example, only a portion of the isolation area is a multi-layer structural area 13a, in other words, a portion of the isolation area is provided as a single-layer structural area.

The multi-layer structural area 13a can be one or multiple. For example, there are multiple multi-layer structural areas 13a, and adjacent multi-layer structural areas 13a can be connected through a single-layer structural area.

The bent area P1 is an area in the electrode assembly 10 that has a bending structure. In the bent area P1, the first electrode plate 11, the second electrode plate 12, and the isolation assembly 13 are all bent. For example, the portion of the first electrode plate 11 located in the bent area P1 is roughly bent into a circular arc shape, while the portion of the second electrode plate 12 located in the bent area P1 is roughly bent into a circular arc shape.

The electrode assembly 10 can be a bent area P1 as a whole, or only a partial area thereof can be a bent area P1. For example, the electrode assembly 10 includes a straight area P2 and a bent area P1, wherein the bent area P1 is connected to the straight area P2, and the straight area P2 is an area of the electrode assembly 10 having a straight structure.

The multi-layer structural area 13a can be provided as a whole in the bent area P1 or only partly provided in the bent area P1.

The first electrode plate 11 and the second electrode plate 12 located in the bent area P1 need to be bent, and the active substance layer of the first electrode plate 11 and the active substance layer of the second electrode plate 12 are prone to stress concentration in the bending process, leading to the peeling-off of the respective active substances. Due to the peeling-off of the active substances, the intercalating sites of metal ions in the negative electrode active substance layer may be fewer than the number of the metal ions that can be provided by the adjacent positive electrode active substance layer, leading to the phenomenon of metal ion precipitation. The embodiments of the present application provides at least a portion of the multi-layer structural area 13a in the bent area P1. Even if the metal ions precipitate in the bent area P1, the multi-layer structural area 13a can block the dendrites of the precipitated metal layer, so as to reduce the probability of conduction between the first electrode plate 11 and the second electrode plate 12, effectively reduce the risk of short circuit, and improve the service life and safety of the electrode assembly 10.

Specifically, after a metal layer precipitates on the surface of the negative electrode plate (the first electrode plate 11 or the second electrode plate 12), the metal layer will compress the isolation layer of the multi-layer structural area 13a close to the negative electrode plate, and the isolation layer close to the negative electrode plate will stretch under the compression of the metal layer. When the pore size of the local micropores in the isolation layer close to the negative electrode plate increases and forms a defect area, small dendrites in the metal layer may pass through the defect area. The isolation layer of multi-layer structural area 13a away from the negative electrode plate can insulate and isolate the dendrites passing through the defect area from the positive electrode plate, thereby reducing the risk of the dendrites in contact with the positive electrode plate and improving the safety.

The distance between the isolation layer of the multi-layer structural area 13a away from the negative electrode plate and the metal layer is large, and the isolation layer away from the negative electrode plate is subjected to less squeezing force from the metal layer. The risk of stretching and producing a defect area under the squeezing force is also low. The position of a defect area of the isolation layer generated in the stretching process is uncertain. Even if a defect area is generated in the isolation layer away from the negative electrode plate, the possibility of the defect area of the isolation layer away from the negative electrode plate being directly opposite to the defect area of the isolation layer close to the negative electrode plate is very small, and it is relatively difficult for the dendrites to penetrate through the multi-layer structural area 13a completely. Therefore, the embodiments of the present application can effectively reduce the risk of short circuit and improve the safety by providing the multi-layer structural area 13a.

In some embodiments, the winding direction W of the electrode assembly 10 is the direction in which the first electrode plate 11, the second electrode plate 12, and the isolation assembly 13 are wound circumferentially from the inside to the outside. For example, in Fig. 4, the winding direction W is clockwise.

In some embodiments, the first bent portion 111 of the first electrode plate 11 is adjacent to the first bent portion 121 of the second electrode plate 12, and at least a portion of the multi-layer structural area 13a is provided within the first accommodating gap G1 between the first bent portion 111 of the first electrode plate 11 and the first bent portion 121 of the second electrode plate 12.

The first bent portion 111 of the first electrode plate 11 is the portion of the first electrode plate 11 where bending occurs for the first time in the winding process along the winding direction W. For example, the first bent portion 111 of the first electrode plate 11 is generally in a circular arc shape.

The first bent portion 121 of the second electrode plate 12 is the portion of the second electrode plate 12 where bending occurs for the first time in the winding process along the winding direction W. For example, the first bent portion 121 of the second electrode plate 12 is generally in a circular arc shape.

The first bent portion 111 of the first electrode plate 11 adjacent to and the first bent portion 121 of the second electrode plate 12 means that the first electrode plate 11 and the second electrode plate 12 are not provided between the first bent portion 111 of the first electrode plate 11 and the first bent portion 121 of the second electrode plate 12.

The multi-layer structural area 13a can be accommodated as a whole in the first accommodation gap G1, or only can be partly accommodated in the first accommodation gap G1.

The first bent portion 111 of the first electrode plate 11 can be located on the inner side of the first bent portion 121 of the second electrode plate 12, or on the outer side of the first bent portion 121 of the second electrode plate 12.

The curvature of the first bent portion 111 of the first electrode plate 11 and the curvature of the first bent portion 121 of the second electrode plate 12 are relatively large. During charging, the first bent portion 111 of the first electrode plate 11 or the first bent portion 121 of the second electrode plate 12 are prone to the problem of metal ion precipitation. The embodiments reduce the risk of the dendrites conducting the first bent portion 111 of the first electrode plate 11 with the first bent portion 121 of the second electrode plate 12 by providing at least a portion of the multi-layer structural area 13a in the first accommodating gap G1, thereby improving the safety of the battery cell.

In some embodiments, the second bent portion 112 of the first electrode plate 11 is adjacent to the second bent portion 122 of the second electrode plate 12. At least a portion of the multi-layer structural area 13a is located within the second accommodating gap G2 between the second bent portion 112 of the first electrode plate 11 and the second bent portion 122 of the second electrode plate 12.

The second bent portion 112 of the first electrode plate 11 is the portion of the first electrode plate 11 where bending occurs for the second time in the winding process along the winding direction W. For example, the second bent portion 112 of the first electrode plate 11 is generally in a circular arc shape.

The second bent portion 122 of the second electrode plate 12 is the portion of the second electrode plate 12 where bending occurs for the second time in the winding process along the winding direction W. For example, the second bent portion 122 of the second electrode plate 12 is generally in a circular arc shape.

The multi-layer structural area 13a can be accommodated as a whole in the second accommodation gap G2, or only can be partly accommodated in the second accommodation gap G2.

The second bent portion 112 of the first electrode plate 11 can be located on the inner side of the second bent portion 122 of the second electrode plate 12, or on the outer side of the second bent portion 122 of the second electrode plate 12.

In some examples, a portion of the same multi-layer structural area 13a is accommodated in the first accommodation gap G1, and another portion is accommodated in the second accommodation gap G2. In other examples, at least a portion of one multi-layer structural area 13a is accommodated in the first accommodation gap G1, and at least a portion of another multi-layer structural area 13a is accommodated in the second accommodation gap G2.

The curvature of the second bent portion 112 of the first electrode plate 11 and the curvature of the second bent portion 122 of the second electrode plate 12 are relatively large. During charging, the second bent portion 112 of the first electrode plate 11 or the second bent portion 122 of the second electrode plate 12 are prone to the problem of metal ion precipitation. The embodiment reduces the risk of the dendrites conducting the second bent portion 112 of the first electrode plate 11 with the second bent portion 122 of the second electrode plate 12 by providing at least a portion of the multi-layer structural area 13a in the second accommodating gap G2, thereby improving the safety of the battery cell.

In some embodiments, the number of layers of the multi-layer structural area 13a accommodated in the first accommodating gap G1 is larger than or equal to the number of layers of the multi-layer structural area 13a accommodated in the second accommodating gap G2.

In some embodiments, the isolation assembly 13 further includes a single-layer structural area located between the first electrode plate 11 and the second electrode plate 12. The single-layer structural area is an area of the isolation assembly 13 having a single-layer structure. The single-layer structural area can be one or multiple.

The single-layer structural area can be configured to correspond to the position of metal ions that are not easily precipitated from the electrode plate. The single-layer structural area has fewer layers, which can reduce the amount of the isolation assembly 13 and improve the energy density of the battery cell.

In some embodiments, the multi-layer structural area 13a extends continuously along the winding direction W of the electrode assembly 10 and passes through the first accommodating gap G1 and the second accommodating gap G2 in sequence.

The multi-layer structural area 13a is provided continuously and can simultaneously isolate the first bent portion 111 of the first electrode plate 11 from the first bent portion 121 of the second electrode plate 12, as well as the second bent portion 112 of the first electrode plate 11 from the second bent portion 122 of the second electrode plate 12, thereby reducing safety risks caused by metal ion precipitation and simplifying the structure of the isolation assembly 13, facilitating the formation of the isolation assembly 13.

In some embodiments, the second electrode plate 12 is the negative electrode plate, and the first electrode plate 11 is the positive electrode plate. The first bent portion 121 of the second electrode plate 12 is located on the inner side of the first bent portion 111 of the first electrode plate 11.

The first bent portion 121 of the second electrode plate 12 provided on the inner side of the first bent portion 111 of the first electrode plate 11 can reduce the waste of positive electrode active substance and improve the capacity of the electrode assembly 10. The curvature of the first bent portion 121 of the second electrode plate 12 is larger than that of the first bent portion 111 of the first electrode plate 11. The first bent portion 121 of the second electrode plate 12 is more prone to the peeling-off of active substances due to bending, and the first bent portion 121 of the second electrode plate 12 is also more prone to the metal ion precipitation. The multi-layer structural area 13a can block the dendrites, so as to reduce the probability of conduction between the first bent portion 121 of the second electrode plate 12 and the first bent portion 111 of the first electrode plate 11, effectively reduce the risk of short circuit, and improve the service life and safety of the electrode assembly 10.

In some embodiments, the second electrode plate 12 is the negative electrode plate, and the first electrode plate 11 is the positive electrode plate. The second bent portion 122 of the second electrode plate 12 is located on the inner side of the second bent portion 112 of the first electrode plate 11.

The second bent portion 122 of the second electrode plate 12 provided on the inner side of the second bent portion 112 of the first electrode plate 11 can reduce the waste of positive electrode active materials and improve the capacity of the electrode assembly 10. The curvature of the second bent portion 122 of the second electrode plate 12 is larger than that of the second bent portion 112 of the first electrode plate 11. The second bent portion 122 of the second electrode plate 12 is more prone to the peeling-off of active substances due to bending, and the second bent portion 122 of the second electrode plate 12 is also more prone to metal ion precipitation. The multi-layer structural area 13a can block the dendrites, so as to reduce the probability of conduction between the second bent portion 122 of the second electrode plate 12 and the second bent portion 112 of the first electrode plate 11, effectively reduce the risk of short circuit, and improve the service life and safety of the electrode assembly 10.

In some embodiments, the isolation assembly 13 includes a first isolation member 131 and a second isolation member 132. The first isolation member 131 includes a first isolation layer 133, and the second isolation member 132 includes a second isolation layer 134. The extension length of each of the first isolation layer 133 and the second isolation layer 134 along the winding direction W of the electrode assembly 10 is larger than the extension length of either of the first electrode plate 11 and the second electrode plate 12. The first isolation layer 133 and the second isolation layer 134 insulate and isolate the first electrode plate 11 from the second electrode plate 12.

The extension length L1 of the first isolation layer 133 along the winding direction W of the electrode assembly 10 can be the length of the first isolation layer 133 in a flattened state. The extension length L2 of the second isolation layer 134 along the winding direction W of the electrode assembly 10 can be the length of the second isolation layer 134 in a flattened state. The extension length L3 of the first electrode plate 11 can be the length of the first electrode plate 11 in a flattened state. The extension length L4 of the second electrode plate 12 can be the length of the second electrode plate 12 in the flattened state. L1>L3, L1>L4, L2>L3, L2>L4.

The embodiments of the present application does not limit the size of L1 and L2, and L1 may be larger than, less than, or equal to L2

The first isolation layer 133 and the second isolation layer 134 both have a large extension length, and can insulate and isolate the first electrode plate 11 from the second electrode plate 12, thereby reducing the risk of short circuit between the first electrode plate 11 and the second electrode plate 12.

In some embodiments, the first isolation member 131 further includes a third isolation layer 135. The first isolation member 131 is folded to form the first isolation layer 133 and the third isolation layer 135. The multi-layer structural area 13a includes an area where the first isolation layer 133 and the third isolation layer 135 are stacked between the first electrode plate 11 and the second electrode plate 12.

In the winding direction W of the electrode assembly 10, the extension length of the first isolation layer 133 may be larger than, less than, or equal to the extension length of the third isolation layer 135.

The first isolation layer 133 and the third isolation layer 135 are an integrated structure.

The third isolation layer 135 can be one or multiple. In some examples, the first isolation member 131 forms one third isolation layer 135 and one first isolation layer 133 through a single folding. In other examples, the first isolation member 131 forms one first isolation layer 133 and multiple third isolation layers 135 through multiple folding.

The first isolation member 131 can be folded at the winding starting end 133a of the first isolation layer, or folded at the winding ending end 133b of the first isolation layer. The folding position of the first isolation member 131 can be the boundary between the first isolation layer 133 and the third isolation layer 135.

The third isolation layer 135 can be stacked on the inner side of the first isolation layer 133, or stacked on the outer side of the first isolation layer 133.

The first isolation layer 133 includes a first area located between the first electrode plate 11 and the second electrode plate 12, and the third isolation layer 135 includes a third area located between the first electrode plate 11 and the second electrode plate 12. The first area and the third area completely overlap each other. The multi-layer structural area 13a includes the first and third areas.

In the embodiments of the present application, the first isolation layer 133 and the third isolation layer 135 are formed by folding the first isolation member 131, and a multi-layer structural area 13a can be formed without the need for additionally adding an isolation member. This can make the winding process more convenient and the integration of the electrode assembly 10 better.

In some embodiments, in the direction opposite to the winding direction W of the electrode assembly 10, the second electrode plate 12 extends beyond the winding starting end 11a of the first electrode plate.

For example, in Fig. 4, the winding direction W of the electrode assembly 10 is clockwise, and the direction opposite to the winding direction W of the electrode assembly 10 is counterclockwise. Of course, when the winding direction W of the electrode assembly 10 is counterclockwise, the direction opposite to the winding direction W of the electrode assembly 10 is clockwise.

When the first electrode plate 11 is in a flattened state, the two ends of the first electrode plate 11 along its own length direction are the winding starting end 11a of the first electrode plate and the winding ending end 11b of the first electrode plate. When in the winding state, the winding starting end 11a of the first electrode plate is close to the inside of the electrode assembly 10, and the winding ending end 11b of the first electrode plate is close to the outside of the electrode assembly 10; in the winding and forming process of the electrode assembly 10, the winding of the first electrode plate 11 starts from the winding starting end 11a of the first electrode plate and stops at the winding ending end 11b of the first electrode plate.

In some embodiments, the second electrode plate 12 is the negative electrode plate, and the first electrode plate 11 is the positive electrode plate. The second electrode plate 12 extends beyond the winding starting end 11a of the first electrode plate, and the second electrode plate 12 can receive the metal ions released from the first electrode plate 11, thereby reducing the risk of metal ion precipitation.

In some embodiments, the first isolation layer 133 includes a first winding starting section 1331 that extends beyond the winding starting end 11a of the first electrode plate and a first isolation section 1332 located between the first electrode plate 11 and the second electrode plate 12. The third isolation layer 135 includes a third winding starting section 1351 that extends beyond the winding starting end 11a of the first electrode plate and a third isolation section 1352 located between the first electrode plate 11 and the second electrode plate 12. The winding starting end of the first winding starting section 1331 is connected to the winding starting end of the third winding starting section 1351 integrally. The multi-layer structural area 13a includes an area where the first isolation section 1332 and the third isolation section 1352 are stacked between the first electrode plate 11 and the second electrode plate 12.

The first winding starting section 1331 is the portion of the first isolation layer 133 that extends beyond the winding starting end 11a of the first electrode plate. The first isolation section 1332 is provided to be continuous with the first winding starting section 1331, and the boundary between the first isolation section 1332 and the first winding starting section 1331 corresponds to the winding starting end 11a of the first electrode plate.

The third winding starting section 1351 is the portion of the third isolation layer 135 that extends beyond the winding starting end 11a of the first electrode plate. The third isolation section 1352 is provided to be continuous with the third winding starting section 1351, and the boundary between the third isolation section 1352 and the third winding starting section 1351 corresponds to the winding starting end 11a of the first electrode plate.

For example, the winding starting end of the first winding starting section 1331 is the winding starting end 133a of the first isolation layer. In the winding and forming process of the electrode assembly 10, the winding of the first isolation layer 133 starts from the winding starting end of the first winding starting section 1331. The winding starting end of the third winding starting section 1351 is the winding starting end 135a of the third isolation layer. In the winding and forming process of the electrode assembly 10, the winding of the third isolation layer 135 starts from the winding starting end of the third winding starting section 1351.

The first isolation section 1332 is a portion of the first isolation layer 133 that can effectively isolate the first electrode plate 11 from the second electrode plate 12. For example, the first isolation section 1332 as a whole is located between the first electrode plate 11 and the second electrode plate 12.

The third isolation section 1352 is a portion of the third isolation layer 135 that can effectively isolate the first electrode plate 11 from the second electrode plate 12. For example, the third isolation section 1352 as a whole is located between the first electrode plate 11 and the second electrode plate 12.

The first isolation section 1332 includes a first area, and the third isolation section 1352 includes a third area.

The first isolation member 131 is folded at the connection between the winding starting end of the first winding starting section 1331 and the winding starting end of the third winding starting section 1351.

By providing the first winding starting section 1331, it is convenient for the winding device to clamp the first isolation layer 133, thereby reducing the risk of powder falling caused by the winding device directly clamping the electrode plate. The winding starting end of the first winding starting section 1331 is connected to the winding starting end of the third winding starting section 1351 integrally, and the winding device can almost simultaneously wind the first isolation layer 133 and the third isolation layer 135, thereby improving the winding efficiency.

In some embodiments, in the winding direction W of the electrode assembly 10, the winding ending end 133b of the first isolation layer extends beyond the winding ending end 135b of the third isolation layer.

In the winding direction W of the electrode assembly 10, the extension length of the first isolation layer 133 is larger than that of the third isolation layer 135. For example, the first isolation layer 133 can be understood as the basic isolation layer configured to isolate the first electrode plate 11 from the second electrode plate 12, and the third isolation layer 135 can be understood as an additionally added isolation layer, i.e. an additional isolation layer.

When the first isolation layer 133 is in a flattened state, the two ends of the first isolation layer 133 along its own length direction are the winding starting end 133a and the winding ending end 133b of the first isolation layer. The winding starting end 133a of the first isolation layer is the winding starting end of the first winding starting section 1331.When the first isolation layer 133 is in the winding state, the winding starting end 133a of the first isolation layer is close to the inside of the electrode assembly 10, and the winding ending end 133b of the first isolation layer is close to the outside of the electrode assembly 10. In the winding and forming process of the electrode assembly 10, the winding of the first isolation layer 133 starts from the winding starting end 133a of the first isolation layer and stops at the winding ending end 133b of the first isolation layer.

When the third isolation layer 135 is in a flattened state, the two ends of the third isolation layer 135 along its own length direction are the winding starting end 135a of the third isolation layer and the winding ending end 135b of the third isolation layer. The winding starting end 135a of the third isolation layer is the winding starting end of the third winding starting section 1351. When the third isolation layer 135 is in the winding state, the winding starting end 135a of the third isolation layer is close to the inside of the electrode assembly 10, and the winding ending end 135b of the third isolation layer is close to the outside of the electrode assembly 10. In the winding and forming process of the electrode assembly 10, the winding of the third isolation layer 135 starts from the winding starting end 135a of the third isolation layer and stops at the winding ending end 135b of the third isolation layer.

The first isolation layer 133 has a large length, and can insulate and isolate the first electrode plate 11 from the second electrode plate 12. The third isolation layer 135 can have a small length and can only be provided in the inner ring area of the electrode assembly 10 that is prone to metal ion precipitation, thereby reducing the amount of the third isolation layer 135, lowering the costs, and improving the energy density of the electrode assembly 10 while blocking the dendrites.

In some embodiments, in the winding direction W of the electrode assembly 10, the extension length of the first isolation section 1332 is larger than that of the third isolation section 1352.

The multi-layer structural area 13a includes a third isolation section 1352 and an area of the first isolation section 1332 where the first isolation section 1332 is stacked with the third isolation section 1352.

In some embodiments, the third isolation section 1352 is stacked on the outer side of the first isolation section 1332.

The first isolation layer 133 has a large extension length and needs to be wound continuously with the first electrode plate 11 and the second electrode plate 12, which requires the first isolation layer 133 to have a large tension to reduce the risk of wrinkling of the first isolation layer 133 in the winding process. The greater the tension is, the easier it is for the first isolation layer 133 to produce a defect area when subjected to the compression of the dendrites. The embodiments of the present application stacks the third isolation section 1352 on the outer side of the first isolation section 1332, which can reduce the influence of the tension from the first isolation section 1332 on the third isolation section 1352, reduce the pressure on the third isolation section 1352, reduce the possibility of the third isolation section 1352 being pierced when compressed by the dendrites, reduce the risk of the dendrites conducting the first electrode plate 11 with the second electrode plate 12, and improve the safety.

For example, if the third isolation section 1352 is stacked on the inner side of the first isolation section 1332, the third isolation section 1352 will be compressed by the first isolation layer 133 under the tension of the first isolation layer 133, so that the third isolation section 1352 easily produces the defect area when compressed by the dendrites. The third isolation section 1352 stacked on the outer side of the first isolation section 1332 can reduce the influence of the tension from the first isolation section 1332 on the third isolation section 1352. In other words, compared to the solution where the third isolation section 1352 is stacked on the inner side of the first isolation section 1332, the third isolation section 1352 stacked on the outer side of the first isolation section 1332 can make it more difficult for the dendrites to penetrate through both the first isolation section 1332 and the third isolation section 1352, and reduce the risk of short circuit.

In some embodiments, the second isolation member 132 further includes a fourth isolation layer 136. The second isolation member 132 is folded to form the second isolation layer 134 and the fourth isolation layer 136. The multi-layer structural area 13a includes an area where the first isolation layer 133 and the fourth isolation layer 136 are stacked between the first electrode plate 11 and the second electrode plate 12.

In the winding direction W of the electrode assembly 10, the extension length of the second isolation layer 134 may be larger than, less than, or equal to the extension length of the fourth isolation layer 136.

The second isolation layer 134 and the fourth isolation layer 136 are an integrated structure.

The fourth isolation layer 136 can be one or multiple. In some examples, the second isolation member 132 forms one second isolation layer 134 and one fourth isolation layer 136 through a single folding. In other examples, the second isolation member 132 forms one second isolation layer 134 and multiple fourth isolation layers 136 through multiple folding.

The second isolation member 132 can be folded at the winding starting end 134a of the second isolation layer, or folded at the winding ending end 134b of the second isolation layer. The folding position of the second isolation member 132 can be the boundary between the second isolation layer 134 and the fourth isolation layer 136.

The fourth isolation layer 136 can be stacked on the inner side of the second isolation layer 134 or on the outer side of the second isolation layer 134.

In the embodiments of the present application, the second isolation layer 134 and the fourth isolation layer 136 are formed by folding the second isolation member 132, and a multi-layer structural area 13a can be formed without the need for additionally adding the isolation member, which can make the winding process more convenient and the integration of the electrode assembly 10 better.

In some embodiments, the first isolation layer 133 includes a first winding starting section 1331 that extends beyond the winding starting end 11a of the first electrode plate and a first isolation section 1332 located between the first electrode plate 11 and the second electrode plate 12. The fourth isolation layer 136 includes a fourth winding starting section 1361 that extends beyond the winding starting end 11a of the first electrode plate and a fourth isolation section 1362 located between the first electrode plate 11 and the second electrode plate 12. The winding starting end of the first winding starting section 1331 is flush with the winding starting end of the fourth winding starting section 1361. The multi-layer structural area 13a includes an area where the first isolation section 1332 and the fourth isolation section 1362 are stacked between the first electrode plate 11 and the second electrode plate 12.

The fourth winding starting section 1361 is the portion of the fourth isolation layer 136 that extends beyond the winding starting end 11a of the first electrode plate. The fourth isolation section 1362 is provided to be continuous with the fourth winding starting section 1361, and the boundary between the fourth isolation section 1362 and the fourth winding starting section 1361 corresponds to the winding starting end 11a of the first electrode plate.

For example, the winding starting end of the fourth winding starting section 1361 is the winding starting end 136a of the fourth isolation layer. In the winding and forming process of the electrode assembly 10, the winding of the fourth isolation layer 136 starts from the winding starting end of the fourth winding starting section 1361.

The fourth isolation section 1362 is a portion of the fourth isolation layer 136 that can effectively isolate the first electrode plate 11 from the second electrode plate 12. For example, the fourth isolation section 1362 as a whole is located between the first electrode plate 11 and the second electrode plate 12.

The embodiments of the present application does not require that the winding starting end of the first winding starting section 1331 be absolutely flush with the winding starting end of the fourth winding starting section 1361, and a certain error is allowed between the winding starting end of the first winding starting section 1331 and the winding starting end of the fourth winding starting section 1361. For example, in the winding direction W, if the distance between the winding starting end of the first winding starting section 1331 and the winding starting end of the fourth winding starting section 1361 is less than or equal to 2mm, it can be considered that the winding starting end of the first winding starting section 1331 is flush with the winding starting end of the fourth winding starting section 1361.

The winding starting end of the first winding starting section 1331 is flush with the winding starting end of the fourth winding starting section 1361, and the winding device can almost simultaneously wind the first isolation layer 133 and the fourth isolation layer 136, improving the winding efficiency.

In some embodiments, the second isolation layer 134 includes a second winding starting section 1341 that extends beyond the winding starting end 11a of the first electrode plate.

For example, the winding device can clamp the first winding starting section 1331 and the second winding starting section 1341, and drive the first isolation layer 133, the second isolation layer 134, the third isolation layer 135, and the fourth isolation layer 136 to wind almost simultaneously through the first winding starting section 1331 and the second winding starting section 1341, thereby improving the winding efficiency.

In some embodiments, in the winding direction W of the electrode assembly 10, the winding ending end 133b of the first isolation layer extends beyond the winding ending end 136b of the fourth isolation layer.

In the winding direction W of the electrode assembly 10, the extension length of the first isolation layer 133 is larger than that of the fourth isolation layer 136.

When the fourth isolation layer 136 is in a flattened state, the two ends of the fourth isolation layer 136 along its own length direction are the winding starting end 136a of the fourth isolation layer and the winding ending end 136b of the fourth isolation layer. The winding starting end 136a of the fourth isolation layer is the winding starting end of the fourth winding starting section 1361. When the fourth isolation layer 136 is in the winding state, the winding starting end 136a of the fourth isolation layer is close to the inside of the electrode assembly 10, and the winding ending end 136b of the fourth isolation layer is close to the outside of the electrode assembly 10; In the winding and forming process of the electrode assembly 10, the winding of the fourth isolation layer 136 starts from the winding starting end 136a of the fourth isolation layer and stops at the winding ending end 136b of the fourth isolation layer.

The first isolation layer 133 has a large length, and can insulate and isolate the first electrode plate 11 from the second electrode plate 12. The fourth isolation layer 136 can have a small length and can only be located in the inner ring area of the electrode assembly 10 that is prone to metal ion precipitation, thereby reducing the amount of fourth isolation layer 136, lowering the costs, and improving the energy density of the electrode assembly 10 while blocking the dendrites.

In some embodiments, in the winding direction W of the electrode assembly 10, the extension length of the second isolation layer 134 is larger than that of the fourth isolation layer 136.

The second isolation layer 134 can be understood as the basic isolation layer configured to isolate the first electrode plate 11 from the second electrode plate 12, and the fourth isolation layer 136 can be understood as an isolation layer added additionally, that is, an additional isolation layer.

In some embodiments, in the winding direction W of the electrode assembly 10, the extension length of the first isolation section 1332 is larger than that of the fourth isolation section 1362.

In some embodiments, the fourth isolation section 1362 is stacked on the outer side of the first isolation section 1332.

The first isolation layer 133 has a large extension length and needs to be wound continuously with the first electrode plate 11 and the second electrode plate 12, which requires the first isolation layer 133 to have a high tension to reduce the risk of wrinkling of the first isolation layer 133 in the winding process. The greater the tension is, the easier it is for the first isolation layer 133 to produce a defect area when subjected to the compression of the dendrites. The embodiments of the present application stacks the fourth isolation section 1362 on the outer side of the first isolation section 1332, which can reduce the influence of the tension from the first isolation section 1332 on the fourth isolation section 1362, reduce the pressure on the fourth isolation section 1362, reduce the possibility of the fourth isolation section 1362 being pierced when compressed by the dendrites, reduce the risk of the dendrites conducting the first electrode plate 11 with the second electrode plate 12, and improve the safety.

For example, if the fourth isolation section 1362 is stacked on the inner side of the first isolation section 1332, the fourth isolation section 1362 will be compressed by the first isolation layer 133 under the tension of the first isolation layer 133, so that the fourth isolation section 1362 easily produces a defect area when compressed by the dendrites. The fourth isolation section 1362 stacked on the outer side of the first isolation section 1332 can reduce the influence of the tension from the first isolation section 1332 on the fourth isolation section 1362. In other words, compared to the solution where the fourth isolation section 1362 is stacked on the inner side of the first isolation section 1332, the fourth isolation section 1362 stacked on the outer side of the first isolation section 1332 can make it more difficult for the dendrites to penetrate through both the first isolation section 1332 and the fourth isolation section 1362, and reduce the risk of short circuit.

In some embodiments, the isolation assembly 13 includes a first isolation member 131 and a second isolation member 132. The first isolation member 131 is folded to form a first isolation layer 133 and a third isolation layer 135, while the second isolation member 132 is folded to form a second isolation layer 134 and a fourth isolation layer 136. The multi-layer structural area 13a includes an area where a first isolation layer 133, a third isolation layer 135, and the fourth isolation layer 136 are stacked between the first electrode plate 11 and the second electrode plate 12.

For example, the first isolation layer 133 includes a first area located between the first electrode plate 11 and the second electrode plate 12, the third isolation layer 135 includes a third area located between the first electrode plate 11 and the second electrode plate 12, and the fourth isolation layer 136 includes a fourth area located between the first electrode plate 11 and the second electrode plate 12. The first area, the third area, and the fourth area completely overlap with each other. The multi-layer structural area 13a includes a first area, a third area, and a fourth area provided to be stacked.

The multi-layer structural area 13a includes at least three layers, and the three-layer structure can further block the dendrites, so as to reduce the probability of conduction between the first electrode plate 11 and the second electrode plate 12, effectively reduce the risk of short circuit, and improve the service life and safety of the electrode assembly 10. By folding the first isolation member 131 and the second isolation member 132, a multi-layer structural area 13a with at least three layers of structure can be formed between the first electrode plate 11 and the second electrode plate 12, without the need for additional adding the isolation member, which can make the winding process more convenient and the integration of the electrode assembly 10 better.

In some embodiments, the first electrode plate 11, the second electrode plate 12, and the isolation assembly 13 are wound and form a bent area P1 and a straight area P2.

The straight area P2 is an area of the electrode assembly 10 having a straight structure. The portions of the first electrode plate 11 and the second electrode plate 12 located in the straight area P2 are basically provided straight. For example, the surfaces of the first electrode plate and the second electrode plate of each layer located in the straight area P2 are essentially plane.

In some embodiments, the bent area P1 is set to two, and the two bent areas P1 are respectively provided at two ends of the straight area P2.

In some embodiments, the winding starting end 133a of the first isolation layer and the winding starting end 135a of the third isolation layer are connected with each other integrally and located in the bent area P1, while the winding starting end 134a of the second isolation layer and the winding starting end 136a of the fourth isolation layer are connected with each other integrally and located in the bent area P1.

The winding starting end 133a of the first isolation layer, the winding starting end 134a of the second isolation layer, the winding starting end 135a of the third isolation layer, and the winding starting end 136a of the fourth isolation layer can support the first electrode plate 11 and the second electrode plate 12, increasing the curvature of the first electrode plate 11 bending in the bent area P1 and the curvature of the second electrode plate 12 bending in the bent area P1, thereby reducing stress concentration, reducing the risk of powder falling from the first electrode plate 11 and the second electrode plate 12, and reducing metal ion precipitation.

In some embodiments, the first isolation layer 133 and the second isolation layer 134 are located on two sides of the second electrode plate 12, respectively.

The first isolation layer 133 and the second isolation layer 134 can cover the second electrode plate 12 from two sides to insulate and isolate the second electrode plate 12 from the first electrode plate 11 so as to reduce the risk of short circuit.

In some embodiments, the first isolation layer 133 includes a first winding starting section 1331 that extends beyond the winding starting end 11a of the first electrode plate and a first isolation section 1332 located between the first electrode plate 11 and the second electrode plate 12. The second isolation layer 134 includes a second winding starting section 1341 that extend beyond the winding starting end 11a of the first electrode plate and a second isolation section 1342, with at least a portion of the second isolation section 1342 located between the first electrode plate 11 and the second electrode plate 12. The third isolation layer 135 includes a third winding starting section 1351 that extends beyond the winding starting end 11a of the first electrode plate and a third isolation section 1352 located between the first electrode plate 11 and the second electrode plate 12. The fourth isolation layer 136 includes a fourth winding starting section 1361 that extends beyond the winding starting end 11a of the first electrode plate and a fourth isolation section 1362 located between the first electrode plate 11 and the second electrode plate 12. The multi-layer structural area 13a includes an area where a first isolation section 1332, a third isolation section 1352, and a fourth isolation section 1362 are stacked between the first electrode plate 11 and the second electrode plate 12.

The second winding starting section 1341 is the portion of the second isolation layer 134 that extends beyond the winding starting end 11a of the first electrode plate. The second isolation section 1342 is provided to be continuous with the second winding starting section 1341, and the boundary between the second isolation section 1342 and the second winding starting section 1341 corresponds to the winding starting end 11a of the first electrode plate.

For example, the winding starting end of the second winding starting section 1341 is the winding starting end 134a of the second isolation layer. In the winding and forming process of the electrode assembly 10, the winding of the second isolation layer 134 starts from the winding starting end of the second winding starting section 1341.

For example, the first isolation section 1332 includes the first area, the third isolation section 1352 includes the third area, and the fourth isolation section 1362 includes the fourth area.

The winding device can clamp the first winding starting section 1331 and the second winding starting section 1341, and drive the first isolation layer 133, the second isolation layer 134, the third isolation layer 135, and the fourth isolation layer 136 to almost simultaneously wind through the first winding starting section 1331 and the second winding starting section 1341, thereby improving the winding efficiency. The first isolation layer 133, second isolation layer 134, third isolation layer 135, and fourth isolation layer 136 all exceed the first electrode plate 11, which can reduce the risk of powder falling caused by the winding device clamping the electrode plate directly when the winding is started.

In some embodiments, the first winding starting section 1331 and the third winding starting section 1351 are stacked between the second winding starting section 1341 and the fourth winding starting section 1361.

The second winding starting section 1341 and the fourth winding starting section 1361 can limit the first winding starting section 1331 and the third winding starting section 1351 from two sides, reducing the risk of misalignment between the first winding starting section 1331 and the third winding starting section 1351 during the winding.

In some embodiments, the second isolation section 1342 is stacked on the inner side of the second electrode plate 12. The first isolation section 1332, the third isolation section 1352, and the fourth isolation section 1362 are sequentially stacked on the outer side of the second electrode plate 12.

The third isolation section 1352 and the fourth isolation section 1362 are stacked on the same side of the first isolation section 1332 away from the second isolation section 1342. Therefore, the first isolation member 131 and the second isolation member 132 can be folded while being wound, thereby simplifying the forming process of the electrode assembly 10.

In some embodiments, along the winding direction W, the distance D1 between the end of the third isolation section 1352 away from the third winding starting section 1351 and the end of the fourth isolation section 1362 away from the fourth winding starting section 1361 is less than or equal to 5mm.

For example, the end of the third isolation section 1352 away from the third winding starting section 1351 may be the winding ending end 135b of the third isolation layer, and the end of the fourth isolation section 1362 away from the fourth winding starting section 1361 may be the winding ending end 136b of the fourth isolation layer.

In some examples, the winding ending end 135b of the third isolation layer exceeds the winding ending end 136b of the fourth isolation layer. At this time, the multi-layer structural area 13a includes a three-layer structural area and a two-layer structural area. The three-layer structural area includes an area where a first isolation section 1332, a third isolation section 1352, and a fourth isolation section 1362 are stacked between the first electrode plate 11 and the second electrode plate 12. The two-layer structural area includes an area where the portion of the third isolation section 1352 extending beyond the winding ending end 136b of the fourth isolation layer is stacked with the first isolation section 1332.

In some other examples, the winding ending end 136b of the fourth isolation layer exceeds the winding ending end 135b of the third isolation layer. At this time, the multi-layer structural area 13a includes a three-layer structural area and a two-layer structural area. The three-layer structural area includes an area where a first isolation section 1332, a third isolation section 1352, and a fourth isolation section 1362 are stacked between the first electrode plate 11 and the second electrode plate 12. The two-layer structural area includes an area where the portion of the fourth isolation section 1362 extending beyond the winding ending end 135b of the third isolation layer is stacked with the first isolation section 1332.

In some further other examples, the winding ending end 136b of the fourth isolation layer is flush with the winding ending end 135b of the third isolation layer. At this time, the multi-layer structural area 13a only includes a three-layer structural area which includes an area where the first isolation section 1332, the third isolation section 1352, and the fourth isolation section 1362 are stacked between the first electrode plate 11 and the second electrode plate 12.

When the extension length of the three-layer structural area in the multi-layer structural area 13a meets the requirements, the larger the value of D1 is, the more material is wasted in the isolation assembly. The embodiments of the present application reduces material waste and improves the energy density of the electrode assembly 10 by D1 less than or equal to 5mm.

In some embodiments, D1 is less than or equal to 2mm.

In some embodiments, the end of the third isolation section 1352 away from the third winding starting section 1351 is flush with the end of the fourth isolation section 1362 away from the fourth winding starting section 1361. In other words, D1 is 0mm.

In some embodiments, along the winding direction W of the electrode assembly 10, the third isolation section 1352 extends and passes through the first accommodating gap G1 between the first bent portion 111 of the first electrode plate 11 and the first bent portion 121 of the second electrode plate 12, and the fourth isolation section 1362 extends and passes through the first accommodating gap G1.

The curvature of the first bent portion 111 of the first electrode plate 11 and the curvature of the first bent portion 121 of the second electrode plate 12 are relatively large. During charging, the first bent portion 111 of the first electrode plate 11 or the first bent portion 121 of the second electrode plate 12 are prone to the problem of the metal ion precipitation. The three-layer structure composed of the first isolation section 1332, the third isolation section 1352, and the fourth isolation section 1362 can pass through the first accommodating gap G1 to separate the first bent portion 111 of the first electrode plate 11 from the first bent portion 121 of the second electrode plate 12, thereby reducing the risk of the dendrites conducting the first bent portion 111 of the first electrode plate 11 with the first bent portion 121 of the second electrode plate 12, and improving the safety of the battery cell.

In some embodiments, along the winding direction W of the electrode assembly 10, the third isolation section 1352 extends and passes through the second containment gap G2 between the second bent portion 112 of the first electrode plate 11 and the second bent portion 122 of the second electrode plate 12, and the fourth isolation section 1362 extends and passes through the second containment gap G2.

The curvature of the second bent portion 112 of the first electrode plate 11 and the curvature of the second bent portion 122 of the second electrode plate 12 are relatively large. During charging, the second bent portion 112 of the first electrode plate 11 or the second bent portion 122 of the second electrode plate 12 are prone to the problem of the metal ion precipitation. The three-layer structure composed of the first isolation section 1332, the third isolation section 1352, and the fourth isolation section 1362 can pass through the second containment gap G2 to separate the second bent portion 112 of the first electrode plate 11 from the second bent portion 122 of the second electrode plate 12, thereby reducing the risk of the dendrites conducting the second bent portion 112 of the first electrode plate 11 with the second bent portion 122 of the second electrode plate 12, and improving the safety of the battery cell.

In some embodiments, the first electrode plate 11, the second electrode plate 12, and the isolation assembly 13 are wound and form a straight area P2 and a bent area P1. The end of the third isolation section 1352 away from the third winding starting section 1351 and the end of the fourth isolation section 1362 away from the fourth winding starting section 1361 are both located in the straight area P2.

The end of the third isolation section 1352 away from the third winding starting section 1351 and the end of the fourth isolation section 1362 away from the fourth winding starting section 1361 are clamped in a straight area P2, which can improve the stability of the third isolation section 1352 and the fourth isolation section 1362, reduce the risk of displacement of the third isolation section 1352 and the fourth isolation section 1362 when electrode assembly 10 is subjected to external impacts, and improve the safety.

In some embodiments, in the winding direction W, the third isolation section 1352 extends at least 2mm beyond the second accommodating gap. In other words, in the winding direction W, the dimension of the third isolation section 1352 exceeding the second accommodating gap G2 is D2, and D2≥2mm.

During the charging and discharging, the electrode assembly 10 may expand, causing the third isolation section 1352 prone to be pulled, further causing the third isolation section 1352 to be unable to effectively isolate the second bent portion 112 of the first electrode plate 11 from the second bent portion 122 of the second electrode plate 12. The embodiments of the present application allows the third isolation section 1352 to exceed the second containment gap by at least 2mm, thereby reserving a certain margin for the third isolation section 1352. When the third isolation section 1352 is pulled, it can still pass through the second accommodating gap G2 and isolate the second bent portion 112 of the first electrode plate 11 from the second bent portion 122 of the second electrode plate 12, so as to reduce the risk of short circuit and improve the safety.

In some embodiments, in the winding direction W, the fourth isolation section 1362 exceeds the second accommodating gap G2 by at least 2mm. In other words, in the winding direction W, the dimension of the fourth isolation section 1362 exceeding the second accommodating gap G2 is D3, and D3≥2mm.

During the charging and discharging, the electrode assembly 10 may expand, causing the fourth isolation section 1362 prone to be pulled, thereby causing the fourth isolation section 1362 to be unable to effectively isolate the second bent portion 112 of the first electrode plate 11 from the second bent portion 122 of the second electrode plate 12. The embodiments of the present application allow the fourth isolation section 1362 to exceed the second accommodating gap by at least 2mm, thereby reserving a certain margin for the fourth isolation section 1362. When the fourth isolation section 1362 is pulled, it can still pass through the second accommodating gap G2 and isolate the second bent portion 112 of the first electrode plate 11 from the second bent portion 122 of the second electrode plate 12, so as to reduce the risk of short circuit and improve the safety.

In some embodiments, the first electrode plate 11, the second electrode plate 12, and the isolation assembly 13 are wound to form a straight area P2 and two bent areas P1 which are respectively connected to the two ends of the straight area P2. The first winding starting section 1331, the second winding starting section 1341, the third winding starting section 1351, and the fourth winding starting section 1361 are stacked and form a multi-layer winding section 13b. The multi-layer winding section 13b is bent at least once in each bent area P1.

The multi-layer winding section 13b can support the first electrode plate 11 and the second electrode plate 12, increasing the curvature of the first electrode plate 11 bending in each bent area P1 and the curvature of the second electrode plate 12 bending in each bent area P1, thereby reducing stress concentration, reducing the risk of powder falling from the first electrode plate 11 and the second electrode plate 12, and reducing the metal ion precipitation.

In some embodiments, the first electrode plate 11 is the positive electrode plate, and the second electrode plate 12 is the negative electrode plate.

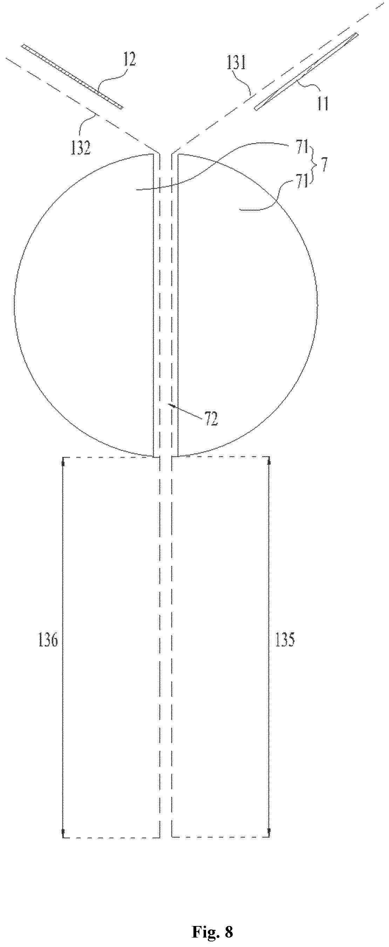

Fig. 8 is a schematic diagram of the electrode assembly provided in some embodiments of the present application in the winding process.

As shown in Fig. 8, the winding device 7 includes two winding half shafts 71, and a channel 72 is provided between the two winding half shafts 71. Before winding, the first isolation member 131 and the second isolation member 132 are drawn to pass through the channel 72 until the length of the portion of the first isolation member 131 passing through the channel 72 and the length of the portion of the second isolation member 132 passing through the channel 72 reach the preset value. Then, the two winding half shafts 71 clamp the first isolation member 131 and the second isolation member 132.

For example, the portion of the first isolation member 131 passing through the channel 72 is the third isolation layer 135, and the portion of the second isolation member 132 passing through the channel 72 is the fourth isolation layer 136. The portion of the first isolation member 131 held by the two winding half shafts 71 is a portion of the first winding starting section 1331, and the portion of the second isolation member 132 held by the two winding half shafts 71 is a portion of the second winding starting section 1341.

The two winding half shafts 71 rotate and start winding the first isolation member 131 and the second isolation member 132. At the same time, the first isolation member 131 is folded as the first isolation layer 133 and the third isolation layer 135, and the second isolation member 132 is folded as the second isolation layer 134 and the fourth isolation layer 136. Under the action of frictional force, the first isolation member 131 and the second isolation member 132 drive the first electrode plate 11 and the second electrode plate 12 to travel and wind around the outer circumference of the two winding half shafts 71.

The winding component can rotate to simultaneously achieve the winding and folding of the first isolation member 131 and the second isolation member 132, thereby improving the forming efficiency of the electrode assembly 10.

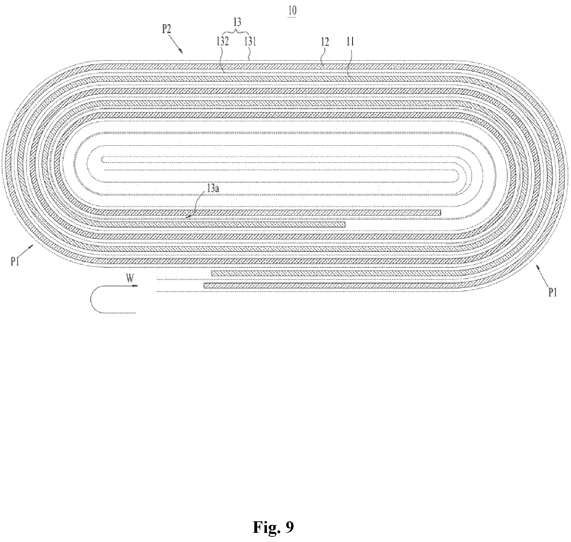

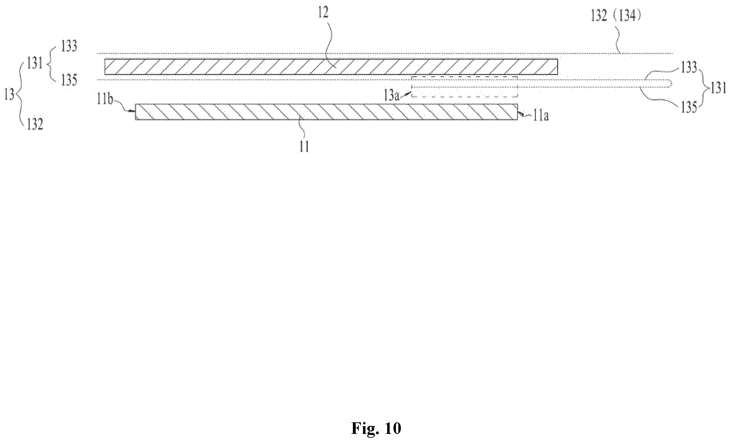

Fig. 9 is a structural schematic diagram of the electrode assembly provided in some embodiments of the present application; Fig. 10 is a structural schematic diagram of the electrode assembly shown in Fig. 9 in a flattened state.

As shown in Figs. 9 and 10, in some embodiments, the isolation assembly 13 includes a first isolation member 131 and a second isolation member 132. The first isolation member 131 is folded to form a first isolation layer 133 and a third isolation layer 135, and the second isolation member 132 includes only the second isolation layer 134.

The first isolation layer 133 and the second isolation layer 134 are located on two sides of the second electrode plate 12. The extension length of each of the first isolation layer 133 and the second isolation layer 134 along the winding direction W of the electrode assembly 10 is larger than the extension length of either of the first electrode plate 11 and the second electrode plate 12. The first isolation layer 133 and the second isolation layer 134 insulate and isolate the first electrode plate 11 from the second electrode plate 12.

The multi-layer structural area 13a includes an area where the first isolation layer 133 and the third isolation layer 135 are stacked between the first electrode plate 11 and the second electrode plate 12.

In some embodiments, the extension length of the third isolation layer 135 is smaller than the extension length of the first isolation layer 133.

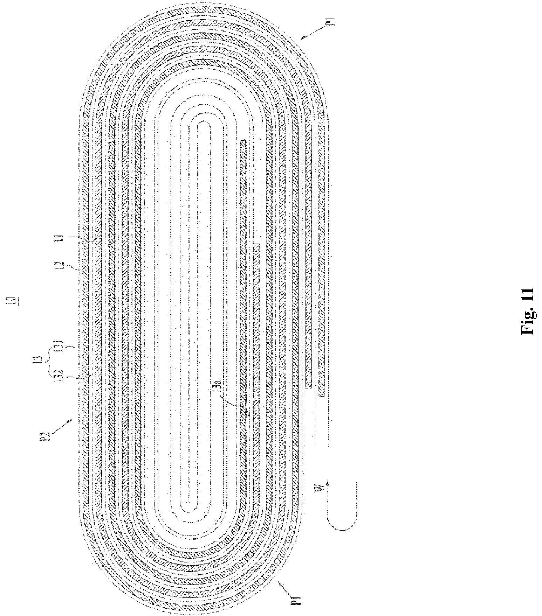

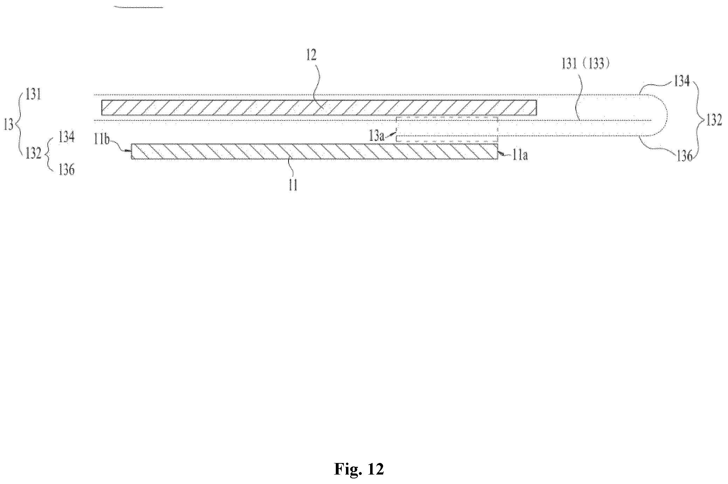

Fig. 11 is a structural schematic diagram of the electrode assembly provided in some embodiments of the present application, Fig. 12 is a structural schematic diagram of the electrode assembly shown in Fig. 11 in a flattened state.

As shown in Figs. 11 and 12, in some embodiments, the isolation assembly 13 includes a first isolation member 131 and a second isolation member 132. The first isolation member 131 includes only the first isolation layer 133, and the second isolation member 132 is folded to form the second isolation layer 134 and the fourth isolation layer 136.

The first isolation layer 133 and the second isolation layer 134 are located on two sides of the second electrode plate 12. The extension length of each of the first isolation layer 133 and the second isolation layer 134 along the winding direction W of the electrode assembly 10 is larger than the extension length of either of the first electrode plate 11 and the second electrode plate 12. The first isolation layer 133 and the second isolation layer 134 insulate and isolate the first electrode plate 11 from the second electrode plate 12.

The multi-layer structural area 13a includes an area where the first isolation layer 133 and the fourth isolation layer 136 are stacked between the first electrode plate 11 and the second electrode plate 12.

In some embodiments, the extension length of the fourth isolation layer 136 is smaller than that of the first isolation layer 133.

According to some embodiments of the present application, the present application further provides a battery cell including a shell and an electrode assembly of any of the above embodiments, wherein the electrode assembly is accommodated within the shell.

According to some embodiments of the present application, the present application further provides a battery including multiple battery cells of any of the above embodiments.

According to some embodiments of the present application, the present application further provides an electrical device including a battery of any of the above embodiments, the battery being configured to provide electrical energy to the electrical device. The electrical device can be any of the aforementioned devices or systems that use the battery.

According to some embodiments of the present application, referring to Figs. 4 to 7, the embodiments of the present application provide an electrode assembly 10 including a first electrode plate 11, a second electrode plate 12, and an isolation assembly 13. The first electrode plate 11 and the second electrode plate 12 have opposite polarities, and the isolation assembly 13 is configured to isolate the first electrode plate 11 from the second electrode plate 12. The first electrode plate 11, the second electrode plate 12, and the isolation assembly 13 are wound and form a bent area P1.

The isolation assembly 13 includes a first isolation member 131 and a second isolation member 132. The first isolation member 131 is folded to form a first isolation layer 133 and a third isolation layer 135, while the second isolation member 132 is folded to form a second isolation layer 134 and a fourth isolation layer 136. The winding starting end 133a of the first isolation layer is connected to the winding starting end 135a of the third isolation layer integrally, and the winding starting end 134a of the second isolation layer is connected to the winding starting end 136a of the fourth isolation layer integrally.

The extension length of each of the first isolation layer 133 and the second isolation layer 134 along the winding direction W of the electrode assembly 10 is larger than the extension length of either of the first electrode plate 11 and the second electrode plate 12. The first isolation layer 133 and the second isolation layer 134 insulate and isolate the first electrode plate 11 from the second electrode plate 12. In the winding direction W, the extension length of the third isolation layer 135 is smaller than that of the first isolation layer 133, and the extension length of the fourth isolation layer 136 is smaller than that of the second isolation layer 134.

The isolation assembly 13 includes a multi-layer structural area 13a provided between the first electrode plate 11 and the second electrode plate 12. The multi-layer structural area 13a includes an area where a first isolation layer 133, a third isolation layer 135, and the fourth isolation layer 136 are stacked between the first electrode plate 11 and the second electrode plate 12.

The isolation assembly 13 includes a multi-layer structural area 13a provided between the first electrode plate 11 and the second electrode plate 12. The multi-layer structural area 13a is provided continuously and passes through the first accommodating gap G1 between the first bent portion 111 of the first electrode plate 11 and the first bent portion 121 of the second electrode plate 12, as well as the second accommodating gap G2 between the second bent portion 112 of the first electrode plate 11 and the second bent portion 122 of the second electrode plate 12.

The following further illustrates the present application in conjunction with the embodiments.

In order to make the invention purpose, the technical solutions, and the beneficial technical effects of the present application clearer, the following will further describe the present application in detail in conjunction with the embodiments. However, it should be understood that the embodiments of the present application are only for explaining the present application and not for limiting the present application, and the embodiments of the present application are not limited to the embodiments provided in the description. If specific experimental or operational conditions are not specified in the embodiments, they shall be made according to conventional conditions or conditions recommended by the material supplier.

Embodiment 1 can be prepared according to the following steps:
(i) A positive electrode slurry is obtained by mixing the positive electrode active substance LiNi_{0.8}Co_{0.1}Mn_{0.1}O₂, the conductive agent acetylene black, and the binder PVDF in a mass ratio of 96:2:2, adding the solvent NMP is added, and stirring them under the action of a vacuum mixer until the system is homogeneous; the positive electrode slurry is applied on the aluminum foil uniformly, is dried at room temperature, is transferred to an oven for continuous drying, and then a positive electrode plate is obtained through cold pressing, slitting, and cutting.
(ii) A negative electrode slurry is obtained by mixing the negative electrode active substance graphite, the conductive agent acetylene black, the thickener CMC, and the binder SBR in a mass ratio of 96.4:1:1.2:1.4, adding the solvent deionized water, stirring them under the action of a vacuum mixer until the system is homogeneous; the negative electrode slurry is applied uniformly on the copper foil, is dried at room temperature, is transferred to an oven for continuous drying, and then a negative electrode plate is obtained through cold pressing, cutting, and cutting.
(iii) An organic solvent is obtained by mixing ethylene carbonate (EC), methyl ethyl carbonate (EMC), and diethyl carbonate (DEC) in a volume ratio of 1:1:1. Then, an electrolyte with a concentration of 1mol/L is prepared by dissolving the fully dried lithium salt LiPF6 in the mixed organic solvent.
(iv) Two polyethylene films with 7 µm thickness serve as the first isolation member and the second isolation member.
(v) The positive electrode plate, the first isolation member, the second isolation member, and the negative electrode plate are stacked together and wound into multiple circles. After winding, they are pressed into a flat shape to prepare an electrode assembly. After winding, the first isolation member is folded to form a first isolation layer and a second isolation layer, and the second isolation member is folded to form a third isolation layer and a fourth isolation layer; the length of the second isolation layer is 652.5mm, and the length of the fourth isolation layer is 652.5mm.
(vi) The electrode assembly is installed into a square shell body and the shell body is welded with the end cover; then, through the process such as liquid injection, standing, forming, and shaping, a battery cell is obtained. For example, the capacity of the battery cell is 60Ah.

In step (v), the gap between the innermost circle of the positive electrode plate and the innermost circle of the negative electrode plate is set to 200 µm artificially so as to accelerate the lithium precipitation of the electrode assembly. In the wound type of electrode assembly, the first isolation layer, the third isolation layer, and the fourth isolation layer are provided between the innermost circle of positive electrode plate and the innermost circle of negative electrode plate.

### Embodiment 2:

The preparation method of the battery cell in Embodiment 2 is similar to Embodiment 1, with the difference that in step (vi), the gap between the innermost two rings of positive electrode plates and the innermost two rings of negative electrode plates is set to 200 µm artificially. The length of the second isolation layer and the length of the fourth isolation layer are both 873.6mm. The first isolation layer, the third isolation layer, and the fourth isolation layer are provided between the second circle of positive electrode plate and the second circle of negative electrode plate.

### Comparative example 1:

The preparation method of the battery cell in Comparative example 1 is similar to Embodiment 1, with the difference that either of the first isolation member and the second isolation member in Comparison example 1 is not folded.

### Comparative example 2:

The preparation method of the battery cell in Comparative example 2 is similar to Embodiment 2, with the difference that either of the first isolation member and the second isolation member in Comparison example 2 is not folded.

Eighty battery cells are prepared respectively in Embodiment 1, Embodiment 2, Comparative example 1 and Comparative example 2, and each battery cell is tested.

Specifically, in a room temperature environment, the battery cells are charged at a rate of 1C and discharged at a rate of 1C, and cycle charge and discharge are performed in a high SOC (e.g. 0.9-1) range.

In Embodiment 1, forty battery cells are fully charged after 500 cycles, and then left to stand for 24 hours. The magnitude of the voltage drop of each battery cell is detected, and the self discharge rate of each battery cell is calculated. The average value was then calculated. The self discharge rate is the voltage drop/time. The remaining forty battery cells in Embodiment 1 were subjected to 2000 cycles, during which the number of battery cell failure is recorded and the failure rate is calculated.

In Embodiment 2, Comparative example 1 and Comparative example 2, the tests were performed according to the above steps.

The evaluation results of Embodiments 1-2 and Comparative Examples 1-2 are shown in Table 1.

**Table 1**

| | self discharge rate | failure rate |
|---|---|---|
| Embodiment 1 | 0.023mV/h | 0% |
| Embodiment 2 | 0.048mV/h | 1.2% |
| Comparison example 1 | 0.76mV/h | 94% |
| Comparison example 2 | 0.8mV/h | 98% |

Referring to Embodiments 1-2 and Comparative Examples 1-2, a multi-layer structural area is provided between the positive electrode plate and the negative electrode plate, which can reduce the risk of short circuit during lithium precipitation on the negative electrode plate and improve the service life of the battery cell.

It should be noted that without conflict, the embodiments and features in the embodiments of the present application can be combined with each other.

Finally, it should be noted that the above embodiments are only configured to illustrate the technical solutions of the present application, and not to limit the present application. Although the present application has been described in detail with reference to the aforementioned embodiments, the skilled person in the art should understand that they can still modify the technical solutions recorded in the aforementioned embodiments, or equivalently replace some of the technical features, but these modifications or replacements do not make the essence of the corresponding technical solutions deviate from the spirit and scope of the technical solutions in the various embodiments of the present application.

## Claims

1. An electrode assembly comprising a first electrode plate, a second electrode plate, and an isolation assembly, wherein the first electrode plate and the second electrode plate have opposite polarities, and the isolation assembly is configured to isolate the first electrode plate from the second electrode plate, the first electrode plate, the second electrode plate, and the isolation assembly are wound and form a bent area;
the isolation assembly comprises a multi-layer structural area provided between the first electrode plate and the second electrode plate, and at least a portion of the multi-layer structural area is provided in the bent area.

2. The electrode assembly according to claim 1, wherein a first bent portion of the first electrode plate is adjacent to a first bent portion of the second electrode plate, and at least a portion of the multi-layer structural area is provided within a first accommodating gap between the first bent portion of the first electrode plate and the first bent portion of the second electrode plate.

3. The electrode assembly according to claim 2, wherein a second bent portion of the first electrode plate is adjacent to a second bent portion of the second electrode plate, and at least a portion of the multi-layer structural area is provided within a second accommodating gap between the second bent portion of the first electrode plate and the second bent portion of the second electrode plate.

4. The electrode assembly according to claim 3, wherein the multi-layer structural area extends continuously along a winding direction of the electrode assembly and sequentially passes through the first accommodating gap and the second accommodating gap.

5. The electrode assembly according to claim 3 or 4, wherein the second electrode plate is a negative electrode plate, and the first electrode plate is a positive electrode plate; the first bent portion of the second electrode plate is located on an inner side of the first bent portion of the first electrode plate, and the second bent portion of the second electrode plate is located on an inner side of the second bent portion of the first electrode plate.

6. The electrode assembly according to any one of claims 1-5, wherein the isolation assembly comprises a first isolation member and a second isolation member, the first isolation member comprises a first isolation layer, and the second isolation member comprises a second isolation layer;
an extension length of each of the first isolation layer and the second isolation layer along the winding direction of the electrode assembly is larger than an extension length of either of the first electrode plate and the second electrode plate, and the first isolation layer and the second isolation layer insulate and isolate the first electrode plate from the second electrode plate.

7. The electrode assembly according to claim 6, wherein the first isolation member further comprises a third isolation layer, and the first isolation member is folded to form the first isolation layer and the third isolation layer;
the multi-layer structural area comprises an area where the first isolation layer and the third isolation layer are stacked between the first electrode plate and the second electrode plate.

8. The electrode assembly according to claim 7, wherein the second electrode plate extends beyond a winding starting end of the first electrode plate in a direction opposite to the winding direction of the electrode assembly;
the first isolation layer comprises a first winding starting section that extends beyond the winding starting end of the first electrode plate and a first isolation section located between the first electrode plate and the second electrode plate, and the third isolation layer comprises a third winding starting section that extends beyond the winding starting end of the first electrode plate and a third isolation section located between the first electrode plate and the second electrode plate;
a winding starting end of the first winding starting section is connected to a winding starting end of the third winding starting section integrally, and the multi-layer structural area comprises an area where the first isolation section and the third isolation section are stacked between the first electrode plate and the second electrode plate.

9. The electrode assembly according to claim 8, wherein the third isolation section is stacked on an outer side of the first isolation section.

10. The electrode assembly according to any one of claims 7-9, wherein in the winding direction of the electrode assembly, a winding ending end of the first isolation layer extends beyond a winding ending end of the third isolation layer.

11. The electrode assembly according to any one of claims 6-10, wherein the second isolation member further comprises a fourth isolation layer, and the second isolation member is folded to form the second isolation layer and the fourth isolation layer;
the multi-layer structural area comprises an area where the first isolation layer and the fourth isolation layer are stacked between the first second electrode plate and the second electrode plate.

12. The electrode assembly according to claim 11, wherein the second electrode plate extends beyond a winding starting end of the first electrode plate in a direction opposite to the winding direction of the electrode assembly;
the first isolation layer comprises a first winding starting section that extends beyond a winding starting end of the first electrode plate and a first isolation section located between the first electrode plate and the second electrode plate, and the fourth isolation layer comprises a fourth winding starting section that extends beyond the winding starting end of the first electrode plate and a fourth isolation section located between the first electrode plate and the second electrode plate;
a winding starting end of the first winding starting section is flush with a winding starting end of the fourth winding starting section, and the multi-layer structural area comprises an area where the first isolation section and the fourth isolation section are stacked between the first electrode plate and the second electrode plate.

13. The electrode assembly according to claim 12, wherein the fourth isolation section is stacked on an outer side of the first isolation section.

14. The electrode assembly according to any one of claims 11-13, wherein in the winding direction of the electrode assembly, a winding ending end of the first isolation layer extends beyond a winding ending end of the fourth isolation layer.

15. The electrode assembly according to any one of claims 1-14, wherein
the isolation assembly comprises a first isolation member and a second isolation member, the first isolation member is folded to form a first isolation layer and a third isolation layer, and the second isolation member is folded to form a second isolation layer and a fourth isolation layer;
the multi-layer structural area comprises an area where the first isolation layer, the third isolation layer, and the fourth isolation layer are stacked between the first electrode plate and the second electrode plate.

16. The electrode assembly according to claim 15, wherein
the first electrode plate, the second electrode plate, and the isolation assembly are wound to form the bent area and a straight area;
a winding starting end of the first isolation layer and a winding starting end of the third isolation layer are connected with each other integrally and located in the bent area, and a winding starting end of the second isolation layer and a winding starting end of the fourth isolation layer are connected with each other integrally and located in the bent area.

17. The electrode assembly according to claim 15 or 16, wherein the first isolation layer and the second isolation layer are located on two sides of the second electrode plate respectively.

18. The electrode assembly according to any one of claims 15-17, wherein
the first isolation layer comprises a first winding starting section that extends beyond the winding starting end of the first electrode plate and a first isolation section located between the first electrode plate and the second electrode plate;
the second isolation layer comprises a second winding starting section that extends beyond the winding starting end of the first electrode plate and a second isolation section, and at least a portion of the second isolation section is located between the first electrode plate and the second electrode plate;
the third isolation layer comprises a third winding starting section that extends beyond the winding starting end of the first electrode plate and a third isolation section located between the first electrode plate and the second electrode plate;
the fourth isolation layer comprises a fourth winding starting section that extends beyond the winding starting end of the first electrode plate and a fourth isolation section located between the first electrode plate and the second electrode plate;
the multi-layer structural area comprises an area where the first isolation section, the third isolation section, and the fourth isolation section are stacked between the first electrode plate and the second electrode plate.

19. The electrode assembly according to claim 18, wherein
the first winding starting section and the third winding starting section are stacked between the second winding starting section and the fourth winding starting section.

20. The electrode assembly according to claim 18 or 19, wherein
the second isolation section is stacked on an inner side of the second electrode plate, and the first isolation section, the third isolation section, and the fourth isolation section are sequentially stacked on an outer side of the second electrode plate.

21. The electrode assembly according to any one of claims 18-20, wherein along the winding direction, a distance between an end of the third isolation section away from the third winding starting section and an end of the fourth isolation section away from the fourth winding starting section is less than or equal to 5mm.

22. The electrode assembly according to any one of claims 18-21, wherein along the winding direction of the electrode assembly, the third isolation section extends and passes through a first accommodating gap between a first bent portion of the first electrode plate and the first bent portion of a second electrode plate, as well as a second accommodating gap between a second bent portion of the first electrode plate and a second bent portion of the second electrode plate, and the fourth isolation section extends and passes through the first accommodating gap and the second accommodating gap.

23. The electrode assembly according to claim 22, wherein the first electrode plate, the second electrode plate, and the isolation assembly are wound and form a straight area and the bent area;
an end of the third isolation section away from the third winding starting section, and an end of the fourth isolation section away from the fourth winding starting section are both in the straight area.

24. The electrode assembly according to claim 22 or 23, wherein in the winding direction, the third isolation section exceeds the second accommodating gap by at least 2mm, and the fourth isolation section exceeds the second accommodating gap by at least 2mm.

25. The electrode assembly according to any one of claims 18-24, wherein the first electrode plate, the second electrode plate, and the isolation assembly are wound and form a straight area and two bent areas, and the two bent areas are connected to two ends of the straight area respectively;
the first winding starting section, the second winding starting section, the third winding starting section, and the fourth winding starting section are stacked to form a multi-layer winding section bending at least once in each bent area.

26. The electrode assembly according to any one of claims 1-25, wherein the first electrode plate is a positive electrode plate and the second electrode plate is a negative electrode plate.

27. A battery cell comprising a shell and the electrode assembly according to any one of claims 1-26, wherein the electrode assembly is accommodated within the shell.

28. A battery comprising a plurality of battery cells according to claim 27.

29. An electrical device comprising the battery for providing electrical energy according to claim 28.
